# EUROPEAN PATENT SPECIFICATION

(11) **EP 1 660 586 B1**
(45) Date of publication and mention of the grant of the patent: **24.08.2011**
(21) Application number: 04756857.1
(22) Date of filing: 09.07.2004
(51) Int. Cl.: C08L 83/08, C09D 183/08

(54) **SILICONES HAVING IMPROVED SURFACE PROPERTIES AND CURABLE SILICONE COMPOSITIONS FOR PREPARING THE SILICONES**
SILIKONE MIT VERBESSERTEN OBERFLÄCHENEIGENSCHAFTEN UND HÄRTBARE SILIKONZUSAMMENSETZUNGEN ZUR HERSTELLUNG DIESER SILKONE
SILICONES PRESENTANT DES PROPRIETES DE SURFACE AMELIOREES ET COMPOSITIONS DE SILICONE DURCISSABLES POUR PREPARER CES SILICONES

(30) Priority: 14.08.2003 US 641863
(43) Date of publication of application: 31.05.2006
(73) Proprietor: Dow Corning Corporation, Midland, MI 48611-0994 (US)
(72) Inventor: AHN, Dongchan, Midland, MI 48640 (US); BHAGWAGAR, Dorab, Edul, Saginaw, MI 48603 (US); LUTZ, Michael, Hope, MI 48603 (US); STOLARCZYK, Jeffrey, Midland, MI 48642 (US)
(74) Representative: Russell, Lindsey
(86) International application number: PCT/US2004/022170
(87) International publication number: WO 2005/019343

(56) References cited:
- EP-A- 0 370 689
- EP-A- 0 655 483
- US-A- 5 616 403

## Description

### Technical Field

This invention relates to curable silicone compositions and products formed by curing the curable silicone compositions. More particularly, this invention relates to hydrosilylation-curable compositions that cure to form products having improved surface properties, such as adhesion, release, wear resistance, chemical resistance and resistance to Bleed.

### Background of the Invention

Polyorganosiloxane elastomers, such as polydimethylsiloxane-based elastomers, are frequently used in the electronics industry for properties such as their thermal stability and ability to relieve stresses over a broad thermal range. In many applications, a large number of important physical properties are strongly dependent upon the properties of the free surface (air interface) and substrate interfaces. Examples of such surface- or interface-dependent properties include adhesion (or conversely, release), chemical resistance, wear resistance or friction, and wetting characteristics, which relate to such barrier properties as stain resistance, water repellency, and resistance to Bleed.

For example, polyorganosiloxane elastomers may suffer from the drawback of poor resistance to some organic chemicals, such as solvents and engine oils. Fluorosilicone elastomers and organic elastomers have been used to improve chemical resistance. However, fluorosilicone elastomers suffer from the drawback of having higher cost than polyorganosiloxane elastomers (that are non-fluorinated). One proposed approach to address this is to combine fluorosilicone elastomers with polyorganosiloxane elastomers. However, proposed approach has generally not been used due to concerns that the fluorosilicone and non-fluorinated organosilicone components would phase separate, resulting in unstable properties. Organic elastomers may suffer from the drawback of having insufficient flexibility or bulk thermal properties. Therefore, there is a need in the electronics industry for elastomers having improved chemical resistance while retaining flexibility and bulk thermal properties.

The combination of solubility parameter, flexibility and low surface energy of polyorganosiloxanes lead to many of its useful properties; however, this also can introduce a problem of limited resistance to Bleed. With some polyorganosiloxane compositions, mobile species within the silicone formulation may Bleed onto contacting surfaces prior to cure. Fluorosilicone-based elastomers may be used to reduce this problem, but still suffer from increased cost. External Bleed of low molecular weight species such as solvents or oils is well known as a limitation of polyorganosiloxane elastomers (that do not contain fluorosilicones), which is related to the aforementioned problem of limited stability upon prolonged exposure to such chemicals. One method to reduce this includes using a thin overcoating of fluorosilicone elastomer over a polyorganosiloxane rubber to reduce Bleed of oil through a silicone coating. This method provides a potential solution to many of the problems related to Bleed, and requires less fluoroorganosilicone than using an all-fluoroorganosilicone rubber, however, this method requires added process steps to create the overcoating.
US 5,616,403 discloses a fluorosilicone coating comprising vinyl-containing fluorosilicone composition, hydrogen-containing siloxane and a catalytic amount of platinum group hydrosilation catalyst. The invention relates to a method of coating fluorosilicone elastomer on a non fluorosilicone substrate to substantially reduce oil permability.
Therefore, there is a need for a polyorganosiloxane-based elastomer composition capable of generating stable surfaces *in*-*situ* that are enriched in fluoroorganosilicone.

Furthermore, hydrosilylation-cured polyorganosiloxane elastomers require the use of internal adhesion promoters to be self-adherent. Examples of such adhesion promoters and self-adherent hydrosilylation-cured polyorganosiloxane elastomers are known in the art. As evidenced from growing body of literature in this field, adhesion of silicone elastomers still remains a challenge, particularly at lower temperatures. There is a need in the industry for elastomers featuring further improvements in adhesion. Generally, adhesion promoters are highly reactive small molecules that should be used at the lowest effective level to reduce detrimental side effects on the bulk properties and cost of the silicone elastomer. Therefore, there is a need for systems that improve the potency of the adhesion promoters.

Conversely, hydrosilylation-cured polyorganosiloxane elastomers without adhesion promoting molecules, particularly those with high crosslink densities, are known for their good release properties from many materials because of the relatively low surface energy of polyorganosiloxanes. However, such polyorganosiloxane elastomers are unsuitable as release coatings for silicone-based pressure-sensitive adhesives, and fluorosilicone elastomers are used as release coatings instead because of their even lower surface energies. The high cost of fluorosilicone materials makes it desirable to offer polyorganosiloxane coatings with stable surfaces that are fluorosilicone rich. Such a system would have value as lower cost alternative solution in many applications currently prescribing fluorosilicone elastomers largely for the surface properties.
EP 0 370 689 discloses a laminate article of manufacture including a silicone pressure sensitive adhesive (SPSA) layer and a separate liner. The liner comprises a backing bearing an adhesive-releasing coating durably adhered thereto. The SPSA layer is made from components (a) a polydiorganosiloxane, (b) an organopolysiloxane, (c) an organohydrogenpolysiloxane and (d) a catalyst. The adhesive-release coating is the reaction product of components consisting essentially of (e) a fluorosilicone polymer, (f) an organohydrogenpolysiloxane and (g) a platinum containing catalyst.

### Summary of the Invention

This invention relates to a composition prepared by mixing components comprising:
(I) a polyorganosiloxane fluid having an average of at least two unsaturated organic groups per molecule,
(II) an organohydrogenpolysiloxane having an average of at least two silicon-bonded hydrogen atoms per molecule,
(III) a hydrosilylation catalyst; and
(IV) a fluoroorganosilicone.

Component (I) is free of fluorine atoms. Component (II) is free of fluorine atoms. Component (IV) has at least one functional group reactive with component (I), component (II), or both.

### Detailed Description of the Invention

All amounts, ratios, and percentages are by weight unless otherwise indicated. The following is a list of definitions, as used herein.

### Definitions and Usage of Terms

"A" and "an" each mean one or more.

"Bleed" means an undesirable tendency for species to move across the interface of a silicone composition or cured product thereof. Bleed includes movement of species out of the silicone composition, or cured product thereof, onto, for example, a substrate on which the silicone composition, or cured product thereof, is applied. Bleed further includes movement of species into the silicone composition, or cured product thereof, from outside of the silicone composition, or cured product thereof.

"Chemical resistance" means reduced tendency of a silicone elastomer to swell, or degrade, or both, when exposed to solvents and oils.

"Combination" means two or more items put together by any method.

The abbreviation "cP" means centipoise.

The abbreviation "IR" means infrared.

"Migration" means the tendency of fluorine-containing species to move toward the interface of a silicone composition or a cured product thereof, without crossing the interface, thereby enriching the content of fluorine-containing species at the interface as compared to the bulk.

The abbreviation "mm" means millimeters.

"Pa·s" means Pascal seconds.

The abbreviation "ppm" means parts per million.

"Silicone" and "siloxane" are used interchangeably herein.

This invention relates to a composition prepared by mixing components comprising:
(I) a polyorganosiloxane fluid having an average of at least two unsaturated organic groups per molecule,
   with the proviso that component (I) is free of fluorine atoms;
(II) an organohydrogenpolysiloxane siloxane having an average of at least two silicon-bonded hydrogen atoms per molecule,
   with the proviso that component (II) is free of fluorine atoms;
(III) a hydrosilylation catalyst; and
(IV) a fluoroorganosilicone,
   with the proviso that component (IV) has at least one functional group reactive with component (I), component (II), or both.

### Component (I) Polyorganosiloxane Fluid

Component (I) is a polyorganosiloxane fluid having an average of at least two unsaturated organic groups per molecule. Component (I) may have a linear or branched structure. Component (I) may be a homopolymer or a copolymer. The unsaturated organic groups may be alkenyl groups having from 2 to 12 carbon atoms and are exemplified by, but not limited to, vinyl, allyl, butenyl, and hexenyl. The unsaturated organic groups may be alkynyl groups having 2 to 12 carbon atoms, and are exemplified by, but not limited to, ethynyl, propynyl, and butynyl. Alternatively, the unsaturated organic groups may contain acrylate-functional or methacrylate-functional groups and are exemplified by, but not limited to, acryloyloxyalkyl such as acryloyloxypropyl and methacryloyloxyalkyl such as methacryloyloxypropyl. The unsaturated organic groups in component (I) may be located at terminal, pendant, or both terminal and pendant positions.

The remaining silicon-bonded organic groups in component (I) may be monovalent organic groups free of aliphatic unsaturation. These monovalent organic groups may have 1 to 20 carbon atoms, alternatively 1 to 10 carbon atoms, and are exemplified by, but not limited to alkyl such as methyl, ethyl, propyl, pentyl, octyl, undecyl, and octadecyl; cycloalkyl such as cyclohexyl; aryl such as phenyl, tolyl, xylyl, benzyl, and 2-phenylethyl; and cyano-functional groups such as cyanoalkyl groups exemplified by cyanoethyl and cyanopropyl. Component (I) is free of fluorine atoms.

Component (I) may have a viscosity of 0.05 to 500 Pa·s at 25°C, alternatively 0.1 to 200 Pa·s at 25°C. Component (I) is added to the composition in an amount of 100 weight parts.

Component (I) may comprise a polyorganosiloxane fluid of the formula
(a)

   R¹₃SiO(R¹₂SiO)*_{α}*(R¹R²SiO)*_{β}*SiR¹₃,
(b)

   R³₂R⁴SiO(R³₂SiO)*_{χ}*(R³R⁴SiO)*_{δ}*SiR³₂R⁴,

   or
(c) a combination thereof.

In formula (a), α has an average value of 0 to 2000, and β has an average value of 2 to 2000. Each R¹ is independently a monovalent organic group. Suitable monovalent organic groups include, but are not limited to, acrylic functional groups such as acryloyloxypropyl and methacryloyloxypropyl; alkyl groups such as methyl, ethyl, propyl, and butyl; alkenyl groups such as vinyl, allyl, and butenyl; alkynyl groups such as ethynyl and propynyl; aromatic groups such as phenyl, tolyl, and xylyl; and cyanoalkyl groups such as cyanoethyl and cyanopropyl. Each R² is independently an unsaturated monovalent organic group. R² is exemplified by alkenyl groups such as vinyl, allyl, and butenyl and alkynyl groups such as ethynyl and propynyl, and acrylic functional groups such as acryloyloxypropyl and methacryloyloxypropyl.

In formula (b), _{X} has an average value of 0 to 2000, and δ has an average value of 0 to 2000. Each R³ is independently a monovalent organic group. Suitable monovalent organic groups include, but are not limited to, acrylic functional groups such as acryloyloxypropyl and methacryloyloxypropyl; alkyl groups such as methyl, ethyl, propyl, and butyl; alkenyl groups such as vinyl, allyl, and butenyl; alkynyl groups such as ethynyl and propynyl; aromatic groups such as phenyl, tolyl, and xylyl; and cyanoalkyl groups such as cyanoethyl and cyanopropyl. Each R⁴ is independently an unsaturated organic hydrocarbon group. R⁴ is exemplified by alkenyl groups such as vinyl, allyl, and butenyl; alkynyl groups such as ethynyl and propynyl; and acrylic functional groups such as acryloyloxypropyl and methacryloyloxypropyl.

Component (I) may comprise polydiorganosiloxanes such as
i) dimethylvinylsiloxy-terminated polydimethylsiloxane,
ii) dimethylvinylsiloxy-terminated poly(dimethylsiloxane/methylvinylsiloxane),
iii) dimethylvinylsiloxy-terminated polymethylvinylsiloxane,
iv) trimethylsiloxy-terminated poly(dimethylsiloxane/methylvinylsiloxane),
v) trimethylsiloxy-terminated polymethylvinylsiloxane,
vi) dimethylvinylsiloxy-terminated poly(dimethylsiloxane/methylphenylsiloxane),
vii) dimethylvinylsiloxy-terminated poly(dimethylsiloxane/diphenylsiloxane),
viii) phenyl,methyl,vinyl-siloxy-terminated polydimethylsiloxane,
ix) dimethyl-acryloyloxypropyl-siloxy-terminated polydimethylsiloxane,
x) dimethyl-methacryloyloxypropyl-siloxy-terminated polydimethylsiloxane,
xi) dimethylhexenylsiloxy-terminated polydimethylsiloxane,
xii) dimethylhexenylsiloxy-terminated poly(dimethylsiloxane/methylhexenylsiloxane),
xiii) dimethylhexenylsiloxy-terminated polymethylhexenylsiloxane,
xiv) trimethylsiloxy-terminated poly(dimethylsiloxane/methylhexenylsiloxane),
xv) dimethylvinylsiloxy-terminated poly(dimethylsiloxane/methylcyanopropylsiloxane), and
xvi) combinations thereof.

Methods of preparing polydiorganosiloxane fluids suitable for use as component (I), such as hydrolysis and condensation of the corresponding organohalosilanes or equilibration of cyclic polydiorganosiloxanes, are well known in the art.

Component (I) may further include resins such as an MQ resin consisting essentially of R⁵₃SiO_{1/2} units and SiO_{4/2} units, a TD resin consisting essentially of R⁵SiO_{3/2} units and R⁵₂SiO_{2/2} units, an MT resin consisting essentially of R⁵₃SiO_{1/2} units and R⁵SiO_{3/2} units, an MTD resin consisting essentially of R⁵₃SiO_{1/2} units, R⁵SiO_{3/2} units, and R⁵₂SiO_{2/2} units, or a combination thereof.

Each R⁵ is a monovalent organic group. The monovalent organic groups represented by R⁵ may have 1 to 20 carbon atoms, alternatively 1 to 10 carbon atoms. Examples of monovalent organic groups include, but are not limited to, acrylate functional groups such as acryloxyalkyl groups, methacrylate functional groups such as methacryloxyalkyl groups, cyano-functional groups, and monovalent hydrocarbon groups. Monovalent hydrocarbon groups include, but are not limited to, alkyl such as methyl, ethyl, propyl, pentyl, octyl, undecyl, and octadecyl; cycloalkyl such as cyclohexyl; alkenyl such as vinyl, allyl, butenyl, and hexenyl; alkynyl such as ethynyl, propynyl, and butynyl; and aryl such as phenyl, tolyl, xylyl, benzyl, and 2-phenylethyl. Cyano-functional groups include, but are not limited to cyanoalkyl groups such as cyanoethyl and cyanopropyl.

The resin may contain an average of 3 to 30 mole percent of unsaturated organic groups. The unsaturated organic groups may be alkenyl groups, alkynyl groups, acrylate-functional groups, methacrylate-functional groups, or combinations thereof. The mole percent of unsaturated organic groups in the resin is the ratio of the number of moles of unsaturated group-containing siloxane units in the resin to the total number of moles of siloxane units in the resin, multiplied by 100.

Methods of preparing resins are well known in the art. For example, resin may be prepared by treating a resin copolymer produced by the silica hydrosol capping process of Daudt et al. with at least an alkenyl-containing endblocking reagent. The method of Daudt et al., is disclosed in U.S. Patent 2,676,182.

Briefly stated, the method of Daudt et al. involves reacting a silica hydrosol under acidic conditions with a hydrolyzable triorganosilane such as trimethylchlorosilane, a siloxane such as hexamethyldisiloxane, or mixtures thereof, and recovering a copolymer having M and Q units. The resulting copolymers generally contain from 2 to 5 percent by weight of hydroxyl groups.

The resin, which typically contains less than 2 percent by weight of silicon-bonded hydroxyl groups, may be prepared by reacting the product of Daudt et al. with an unsaturated organic group-containing endblocking agent and an endblocking agent free of aliphatic unsaturation, in an amount sufficient to provide from 3 to 30 mole percent of unsaturated organic groups in the final product. Examples of endblocking agents include, but are not limited to, silazanes, siloxanes, and silanes. Suitable endblocking agents are known in the art and exemplified in U.S. Patents 4,584,355; 4,591,622; and 4,585,836. A single endblocking agent or a mixture of such agents may be used to prepare the resin.

Component (I) can be a single polyorganosiloxane fluid or a combination comprising two or more polyorganosiloxane fluids that differ in at least one of the following properties: structure, viscosity, average molecular weight, siloxane units, and sequence.

### Component (II) Organohydrogenpolysiloxane

Component (II) is an organohydrogenpolysiloxane having an average of at least two silicon-bonded hydrogen atoms per molecule. Component (II) can be can be a homopolymer or a copolymer. Component (II) can have a linear, branched, cyclic, or resinous structure. The silicon-bonded hydrogen atoms in the component (II) can be located at terminal, pendant, or at both terminal and pendant positions. Component (II) is free of fluorine atoms.

Component (II) can have siloxane units including, but not limited to, HR⁶₂SiO_{1/2}, R⁶₃SiO_{1/2}, HR⁶SiO_{2/2}, R⁶₂SiO_{2/2}, R⁶SiO_{3/2,} and SiO_{4/2} units. In the preceding formulae, each R⁶ is independently selected from monovalent organic groups free of aliphatic unsaturation.

Component (II) may comprise a compound of the formula
(a)

   R⁷₃SiO(R⁷₂SiO)_{ε}(R⁷HSiO)_{φ}SiR⁷₃,

   or
(b)

   R⁸₂HSiO(R⁸₂SiO)_{γ}(R⁸HSiO)_{η}SiR⁸₂H,
(c) a combination thereof.

In formula (a), ε has an average value of 0 to 2000, and φ has an average value of 2 to 2000. Each R⁷ is independently a monovalent organic group free of aliphatic unsaturation. Suitable monovalent organic groups free of aliphatic unsaturation include alkyl groups such as methyl, ethyl, propyl, and butyl; aromatic groups such as phenyl, tolyl, and xylyl; and cyano-functional groups exemplified by cyanoalkyl groups such as cyanoethyl and cyanopropyL

In formula (b), γ has an average value of 0 to 2000, and η has an average value of 0 to 2000. Each R⁸ is independently a monovalent organic group free of aliphatic unsaturation. Suitable monovalent organic groups free of aliphatic unsaturation include alkyl groups such as methyl, ethyl, propyl, and butyl; aromatic groups such as phenyl, tolyl, and xylyl; and cyano-functional groups exemplified by cyanoalkyl groups such as cyanoethyl and cyanopropyl.

Component (II) is exemplified by
i) dimethylhydrogensiloxy-terminated polydimethylsiloxane,
ii) dimethylhydrogensiloxy-terminated poly(dimethylsiloxane/methylhydrogensiloxane),
iii) dimethylhydrogensiloxy-terminated polymethylhydrogensiloxane,
iv) trimethylsiloxy-terminated poly(dimethylsiloxane/methylhydrogensiloxane),
v) trimethylsiloxy-terminated polymethylhydrogensiloxane,
vi) a resin consisting essentially of H(CH₃)₂SiO_{1/2} units and SiO_{4/2} units, and
vii) combinations thereof.

Component (II) can be a combination of two or more organohydrogenpolysiloxanes that differ in at least one of the following properties: structure, average molecular weight, viscosity, siloxane units, and sequence.

Methods of preparing linear, branched, and cyclic organohydrogenpolysiloxanes suitable for use as component (II), such as hydrolysis and condensation of organohalosilanes, are well known in the art. Methods of preparing organohydrogenpolysiloxane resins suitable for use as component (II) are also well known as exemplified in U.S. Patents 5,310,843; 4,370,358; and 4,707,531.

The molar ratio of silicon-bonded hydrogen atoms in component (II) to aliphatically unsaturated groups in component (I) (SiH_{B}/Vi_{A}) is not critical.

### Component (III) Hydrosilylation Catalyst

Component (III) is a hydrosilylation catalyst. Component (III) is added to the composition in an amount of 0.1 to 1000 ppm of platinum group metal, alternatively 1 to 500 ppm, alternatively 2 to 200, alternatively 5 to 150 ppm, based on the weight of the composition. Suitable hydrosilylation catalysts are known in the art and commercially available. Component (III) can be a platinum group metal selected from platinum, rhodium, ruthenium, palladium, osmium or iridium metal or organometallic compound thereof, or a combination thereof. Component (III) is exemplified by compounds such as chloroplatinic acid, chloroplatinic acid hexahydrate, platinum dichloride, and complexes of said compounds with low molecular weight organopolysiloxanes or platinum compounds microencapsulated in a matrix or coreshell type structure. Complexes of platinum with low molecular weight organopolysiloxanes include 1,3-diethenyl-1,1,3,3 -tetramethyldisiloxane complexes with platinum. These complexes may be microencapsulated in a resin matrix.

Suitable hydrosilylation catalysts for component (III) are described in, for example, U.S. Patents 3,159,601; 3,220,972; 3,296,291; 3,419,593; 3,516,946; 3,814,730; 3,989,668; 4,784,879; 5,036,117; and 5,175,325 and EP 0 347 895 B. Microencapsulated hydrosilylation catalysts and methods of preparing them are known in the art, as exemplified in U.S. Patent No. 4,766,176 and the references cited therein; and U.S. Patent No. 5,017,654.

### Component (IV) Fluoroorganosilicone

Component (IV) is a fluoroorganosilicone having at least one functional group reactive with component (I), component (II), or both. Component (IV) may be free of epoxy groups and alkoxy groups. Component (IV) may have a viscosity of 0.0001 to 500 Pa·s at 25 °C.

Component (IV) is selected from a compound of the formula:
(a)

   R⁹₃SiO(R⁹₂SiO)*ₜ*(R⁹R¹⁰SiO)_{ϕ}SiR⁹₃,
(b)

   R¹¹₂R¹²SiO(R¹¹₂SiO)_{κ}(R¹¹R¹²SiO)_{λ}SiR¹¹₂R¹²,
(c)

   F₃C(CF₂)_{ν}R¹³-Si-[O-Si(R¹⁴)₂(R¹⁵)]₃,
(d) a resinous or branched structure consisting essentially of R¹⁵R¹⁴₂SiO_{1/2} units, CF₃(CF₂)_{ν}R¹³SiO_{3/2} units, and optionally SiO_{4/2} units, or
(e) a combination thereof.

In formula (a) *t* has an average value of 0 to 2000, and ϕ has an average value of 1 to 500. Each R⁹ is independently a hydrogen atom or a monovalent organic group that is not an epoxy group or alkoxy group. Suitable monovalent organic groups include monovalent hydrocarbon groups that are free of aliphatic unsaturation such as alkyl groups such as methyl, ethyl, propyl, and butyl; aromatic groups such as phenyl, tolyl, and xylyl; and cyano-functional groups exemplified by cyanoalkyl groups such as cyanoethyl and cyanopropyl. Suitable monovalent organic groups also include unsaturated monovalent organic groups exemplified by acrylate functional groups; methacrylate functional groups; alkenyl groups such as vinyl, allyl, and butenyl; and alkynyl groups such as ethynyl, propynyl, and butynyl. In formula (a) at least one R⁹ is a hydrogen atom or an unsaturated monovalent organic group. Each R¹⁰ is independently a fluoro-functional hydrocarbon group. Suitable fluoro-functional hydrocarbon groups include, but are not limited to, fluorinated alkyl groups such as 3,3,3-trifluoropropyl, 4,4,4,3,3-pentafluorobutyl, 5,5,5,4,4,3,3-heptafluoropentyl, and 6,6,6,5,5,4,4,3,3-nonafluorohexyl.

In formula (b) κ has an average value of 0 to 2000, and λ has an average value of 0 to 500. Each R¹¹ is independently a hydrogen atom or a monovalent organic group that is not an epoxy group or an alkoxy group. Suitable monovalent organic groups include cyano-functional groups exemplified by cyanoalkyl groups such as cyanoethyl and cyanopropyl; and monovalent hydrocarbon groups free of aliphatic unsaturation, exemplified by alkyl groups such as methyl, ethyl, propyl, and butyl; and aromatic groups such as phenyl, tolyl, and xylyl. Suitable monovalent organic groups also include unsaturated monovalent organic groups exemplified by acrylate functional groups; methacrylate functional groups; alkenyl groups such as vinyl, allyl, and butenyl; and alkynyl groups such as ethynyl, propynyl, and butynyl. In formula (b) at least one R¹¹ is a hydrogen atom or an unsaturated monovalent organic group. Each R¹² is independently a fluoro-functional hydrocarbon group. Suitable fluoro-functional hydrocarbon groups include fluorinated alkyl groups such as 3,3,3-trifluoropropyl, 4,4,4,3,3-pentafluorobutyl, 5,5,5,4,4,3,3-heptafluoropentyl, and 6,6,6,5,5,4,4,3,3-nonafluorohexyl.

In formulae (c) and (d), ν is 0 to 10. Each R¹³ is independently a divalent organic group such as a divalent hydrocarbon group. Suitable divalent organic groups for R¹³ may have at least 2 carbon atoms, alternatively, 2 to 20 carbon atoms, alternatively 2 to 10 carbon atoms. Examples of suitable divalent hydrocarbon groups for R¹³ include alkylene groups such as methylene, ethylene, propylene, and butylene. Each R¹⁴ is independently a monovalent hydrocarbon group free of aliphatic unsaturation. R¹⁴ is exemplified by alkyl such as methyl, ethyl, propyl, pentyl, octyl, undecyl, and octadecyl; cycloalkyl such as cyclohexyl; and aryl such as phenyl, tolyl, xylyl, benzyl, and 2-phenylethyl. Each R¹⁵ is independently a hydrogen atom or an aliphatically unsaturated hydrocarbon group exemplified by alkenyl such as vinyl, allyl, butenyl, and hexenyl; and alkynyl such as ethynyl, propynyl, and butynyl. If one R¹⁵ is an aliphatically unsaturated hydrocarbon group, then all R¹⁵ in the molecule may be the same or different aliphatically unsaturated hydrocarbon group. If one R¹⁵ in a molecule is a hydrogen atom, then all R¹⁵ may be hydrogen atoms.

Component (IV) is exemplified by
i) dimethylvinylsiloxy-terminated polymethyl3,3,3-trifluoropropyl siloxane,
ii) dimethylvinylsiloxy-terminated poly(methylhydrogensiloxane/methyl-6,6,6,5,5,4,4,3,3-nonafluorohexylsiloxane),
iii) trimethylsiloxy-terminated poly(methylhydrogensiloxane/methyl-6,6,6,5,5,4,4,3,3-nonafluorohexylsiloxane),
iv) trimethylsiloxy-terminated poly(methylhydrogensiloxane/methyl-6,6,6,5,5,4,4,3,3-nonafluorohexylsiloxane), and
v) combinations thereof.

Component (IV) is added to the composition in an amount of 0.01 to 100 parts by weight based on the weight of component (I). As the optimal composition depends upon the specific properties desired such as viscosity, modulus, or cure speed, the level of component (IV) may vary accordingly. Without wishing to be bound by theory, it is thought that the fluorinated portion of component (IV) enables migration of component (IV) to the surface of the composition when cured. It is thought that sufficient surface modification for many applications requiring fluorosilicone surfaces can be obtained without adding a higher amount of component (IV), which would dramatically increase the cost of the composition. Without wishing to be bound by theory, it is thought that the halogenated portion of component (IV) also enables migration of component (IV), as well as other low molecular weight additives, such as adhesion promoters, to interfaces with a substrate, to allow modification of interface properties such as adhesion and release. The enrichment of component (IV) at surfaces and interfaces is thought to allow control or improvement of such properties as chemical resistance, wear resistance, and wetting characteristics, which relate to such barrier properties as stain resistance, water repellency and resistance to Bleed.

Fluoroorganosilicones suitable for use as component (IV) are known in the art. Fluoroorganosilicones may be prepared by those methods disclosed above for components (I) and (II), by varying appropriate starting materials. One skilled in the art would be able to manufacture suitable fluoroorganosilicones for component (IV) without undue experimentation.

### Optional Components

An optional component may be added to the composition in addition to components (I) - (IV). Suitable optional components include (V) an unsaturated ester-functional compound, (VI) an adhesion promoter, (VII) a void reducing agent, (VIII) a pigment, (IX) a filler, (X) a cure modifier, (XI) a rheology modifier, (XII) a spacer, and combinations thereof.

### (V) Unsaturated Ester-Functional Compound

Component (V) is an unsaturated ester-functional compound, *i.e*., an organic compound having at least one ester group per molecule and at least one unsaturated group per molecule capable of undergoing hydrosilylation. Component (V) may comprise: 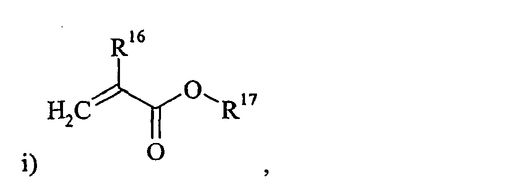 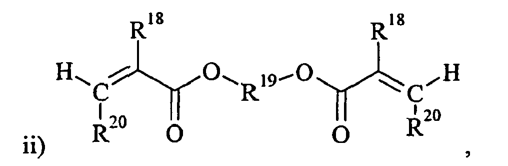 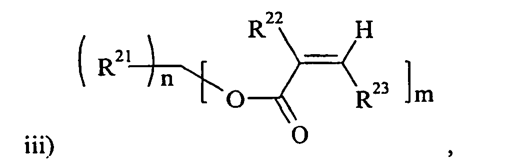 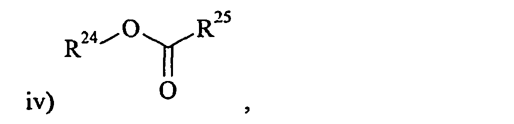 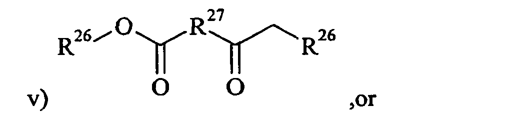 vi) a combination thereof.

In formula i), each R¹⁶ is independently a hydrogen atom, a monovalent hydrocarbon group of 1 to 4 carbon atoms, or CF₃. Examples of monovalent hydrocarbon groups for R¹⁶ include alkyl groups such as methyl, ethyl, propyl, and butyl. Each R¹⁷ is independently a hydrogen atom, a monovalent organic group, with the proviso that not all R¹⁷ are hydrogen atoms, or a metal ion. Examples of monovalent organic groups for R¹⁷ include monovalent hydrocarbon groups, fluoroalkyl groups, epoxy functional groups, and polyether groups. Examples of monovalent hydrocarbon groups include, but are not limited to, alkyl such as methyl, ethyl, propyl, pentyl, octyl, undecyl, dodecyl, and octadecyl; cycloalkyl such as cyclohexyl; alkenyl such as vinyl, allyl, butenyl, and hexenyl; alkynyl such as ethynyl, propynyl, and butynyl; and aryl such as phenyl, tolyl, xylyl, benzyl, and 2-phenylethyl. Examples of epoxy-functional groups for R¹⁷ include 3-glycidoxypropyl. Examples of fluoroalkyl groups for R¹⁷ include but are not limited to -(CH₂)ₓ(CF₂)_{y}CF₃ where x has an average value of 0 to 20 and y has an average value of 0 to 20, branched fluoroalkyl groups such as perfluoro t-butyl, and cyclic fluoroalkyl groups such as perfluorocyclohexyl, and fluoroaryl groups such as perfluorophenyl. Examples of polyether groups for R¹⁷ include, but are not limited to, -(CH₂CH₂O)_{z}CH₂CH₃, - (CH(CH₃)CH₂O)_{z}CH(CH₃)CH₃, -(CH2CH₂O)_{z}CH₂CH=CH₂, - (CH(CH₃)CH₂O)_{z}CH₂CH=CH₂, -(CH₂CH₂CH₂CH₂O)_{z}CH₂CH₃, - (CH₂CH₂CH₂CH₂O)_{z}CH=CH₂, -(CH₂CH₂O)_{z}CH₂CH₂OH, - (CH(CH₃)CH₂O)_{z}CH(CH₃)CH₂-OH, -(CH₂CH₂O)_{z}CH₂CH₂OCH₃, and - (CH(CH₃)CH₂O)_{z}CH(CH₃)CH₂-OCH₃ where z has an average value of 1 to 20, and cyclic ethers such as tetrahydrofurfuryl and 2-(caprolactone)ethyl. Examples of fluoropolyether groups for R¹⁷ include, but are not limited to, -(CF₂-CF₂-O)_{z}H, -(CF(CF₃)CF₂O)_{z}H, - (CF₂CF₂O)_{z}CF₃, -(CF(CF₃)CF₂O)_{z}CF₃, where z is as defined above, -(CH₂)ᵢ(CF(CF₃))ⱼ-(O-CF(CF₃)ₖ-F where i has an average value of 0 to 10, j has an average value of 0 to 10 and k has an average value of 1 to 20. Examples of metal ions for R¹⁷ include, but are not limited to, positive ions such as Zn, Al, Ca, Na, Mg and K.

In formula ii), each R¹⁸ is independently a hydrogen atom, a monovalent hydrocarbon group of 1 to 4 carbon atoms, or CF₃. Examples of monovalent hydrocarbon groups for R¹⁸ include alkyl such as methyl, ethyl, propyl, and butyl. Each R¹⁹ is independently a divalent organic group of 1 to 20 carbon atoms. Examples of divalent organic groups for R¹⁹ include, but are not limited to, alkylene such as methylene, ethylene, propylene, pentylene, neo-pentylene, octylene, undecylene, and octadecylene; cycloalkylene such as cylcohexylene; alkenylene such as vinylene, allylene, butenylene, and hexenylene; alkynylene such as ethynylene, propynylene, and butynylene; arylene such as phenylene, tolylene, xylylene, benzylene, and 2-phenylethylene; ether diol derivatives such as - (CH₂CH₂O)_{z}-CH₂CH₂- and -(CH(CH₃)CH₂O)_{z}-CH(CH₃)CH₂ where z is as defined above for R¹⁹; alkylene/arylene combinations such as 4,4'-isopropylidene diphenyl (also known as Bisphenol "A"). Examples of divalent fluorinated organic groups for R¹⁹ include, but are not limited to, -(CH₂)ₓ(CH(F))_{y}(CF₂)_{z}-, -(CF₂CF₂O)_{z}-, -(CF(CF₃)CF₂O)_{z}- where x, y, and z are as defined above, perfluorocyclohexyl-1,4-dimethyl, and 4,4'-hexafluoroisopropylidene diphenyl (derived from hexafluoro Bisphenol "A"). Each R²⁰ is independently a hydrogen atom or a monovalent hydrocarbon group of 1 to 20 carbon atoms. Examples of monovalent hydrocarbon groups for R²⁰ include, but are not limited to, alkyl such as methyl, ethyl, propyl, pentyl, octyl, undecyl, and octadecyl; cycloalkyl such as cyclohexyl; alkenyl such as vinyl, allyl, butenyl, and hexenyl; alkynyl such as ethynyl, propynyl, and butynyl; and aryl such as phenyl, tolyl, xylyl, benzyl, and 2-phenylethyl.

In formula iii), n has an average value of 0 to 3 and m = 4-n. Each R²¹ is independently a hydrogen atom, a monovalent hydrocarbon group of 1 to 20 carbon atoms, a hydroxyl group, or CF³. Examples of monovalent hydrocarbon groups for R²¹ include, but are not limited to, alkyl such as methyl, ethyl, propyl, pentyl, octyl, undecyl, and octadecyl; cycloalkyl such as cyclohexyl; alkenyl such as vinyl, allyl, butenyl, and hexenyl; alkynyl such as ethynyl, propynyl, and butynyl; and aryl such as phenyl, tolyl, xylyl, benzyl, and 2-phenylethyl.

Each R²² is independently a hydrogen atom, a monovalent hydrocarbon group of 1 to 4 carbon atoms, or CF³. Examples of monovalent hydrocarbon groups for R²² include, but are not limited to, alkyl such as methyl, ethyl, propyl, pentyl, octyl, undecyl, and octadecyl; cycloalkyl such as cyclohexyl; alkenyl such as vinyl, allyl, butenyl, and hexenyl; alkynyl such as ethynyl, propynyl, and butynyl; and aryl such as phenyl, tolyl, xylyl, benzyl, and 2-phenylethyl.

Each R²³ is independently a hydrogen atom or a monovalent hydrocarbon group of 1 to 20 carbon atoms. Examples of monovalent hydrocarbon groups for R²³ include, but are not limited to, alkyl such as methyl, ethyl, propyl, pentyl, octyl, undecyl, and octadecyl; cycloalkyl such as cyclohexyl; alkenyl such as vinyl, allyl, butenyl, and hexenyl; alkynyl such as ethynyl, propynyl, and butynyl; and aryl such as phenyl, tolyl, xylyl, benzyl, and 2-phenylethyl.

In formula iv), each R²⁴ and each R²⁵ are independently a monovalent organic group or a hydrogen atom with the proviso that at least one of R²⁴ or R²⁵ is unsaturated. Examples of monovalent organic groups for R²⁴ include monovalent hydrocarbon groups, fluoroalkyl groups, epoxy functional groups, and polyether groups, all exemplified by those listed for R¹⁷.

Examples of monovalent organic groups for R²⁵ include monovalent hydrocarbon groups, fluoroalkyl groups, epoxy functional groups, and polyether groups, all exemplified, but not limited, by those listed for R¹⁷. Additional examples of monovalent organic groups for R²⁵ include oxygen-bridged monovalent organic groups such as -O-C(O)O-(CH₂)₀CH=CH₂ where o has an average value of 0 to 20 and carbon-bridged carbonyl groups such as -CH₂-C(O)-CH₃.

In formula v), each R²⁶ is independently a monovalent organic group or a hydrogen atom, with the proviso that at least one R²⁶ is an aliphatically unsaturated monovalent organic group or a hydrogen atom. Examples of monovalent organic groups for R²⁶ include monovalent hydrocarbon groups, fluoroalkyl groups, epoxy functional groups, and polyether groups, all exemplified by those listed for R¹⁷.

Each R²⁷ is independently an oxygen atom or a divalent organic group. Examples of divalent organic groups for R²⁷ include divalent hydrocarbon groups, fluoroalkylene groups, epoxy functional groups, and polyether groups, all exemplified, but not limited, by those listed for R¹⁹.

Component (V) is exemplified by 2-ethylhexylacrylate, 2-ethylhexylmethacrylate, methylacrylate, methylmethacrylate, neopentylglycol diacrylate, neopentylglycoldimethacrylate, glycidyl acrylate, glycidyl methacrylate, allyl acrylate, allyl methacrylate strearyl acrylate, tetrahydrofurfuryl methacrylate, caprolactone acrylate perfluorobutyl acrylate, perfluorobutyl methacrylate, tetrahydroperfluoroacrylate, phenoxyethyl acrylate, phenoxyethyl methacrylate, Bisphenol "A" acrylate, Bisphenol "A" dimethacrylate, ethoxylated Bisphenol "A" acrylate, ethoxylated Bisphenol "A" methacrylate, hexafluoro Bisphenol "A" diacrylate, hexafluoro Bisphenol "A" dimethacrylate, diethyleneglycol diacrylate, diethyleneglycol dimethacrylate, dipropyleneglycol diacrylate, dipropyleneglycol dimethacrylate, polyethyleneglycol diacrylate, polyethyleneglycol dimethacrylate, polypropyleneglycol diacrylate, polypropyleneglycol dimethacrylate, trimethylolpropanetriacrylate, trimethylolpropanetrimethacrylate, ethoxylated trimethylolpropanetriacrylate, ethoxylated trimethylolpropanetrimethacrylate), pentaerythritol triacrylate, pentaerythritol trimethacrylate), pentaerythritol tetraacrylate, pentaerythritol tetramethacrylate, methyl-3-butenoate, allyl methyl carbonate, diallyl pyrocarbonate, allyl acetoacetate, diallyl carbonate, diallyl phthalate, dimethyl itaconate, diallyl carbonate, or a combination thereof.

Component (V) may be added to the composition in an amount of 0.01 to 50 weight parts based on the weight of the composition. Without wishing to be bound by theory, it is thought that component (V) improves both chemical resistance and the adhesive property of the cured product of the composition.

Unsaturated ester-functional compounds suitable for component (V) are known in the art and commercially available from, for example, Sartomer Company and Aldrich Chemical Company. One skilled in the art would be able to obtain unsaturated ester-functional compounds without undue experimentation.

### Component (VI) Adhesion Promoter

Component (VI) is an adhesion promoter. Component (VI) may be added to the composition in an amount of 0.01 to 50 weight parts based on the weight of the composition.

Component (VI) may comprise a transition metal chelate, an alkoxysilane, a combination of an alkoxysilane and a hydroxy-functional polyorganosiloxane, or a combination thereof.

Component (VI) can be an unsaturated or epoxy-functional compound. Suitable epoxy-functional compounds are known in the art and commercially available, see for example, U.S. Patents 4,087,585; 5,194,649; 5,248,715; and 5,744,507 col. 4-5. Component (VI) may comprise an unsaturated or epoxy-functional alkoxysilane. For example, the functional alkoxysilane can have the formula R²⁸_{µ}Si(OR²⁹)_{(4-µ)}, where µ is 1, 2, or 3, alternatively µ is 1.

Each R²⁸ is independently a monovalent organic group with the proviso that at least one R²⁸ is an unsaturated organic group or an epoxy-functional organic group. Epoxy-functional organic groups for R²⁸ are exemplified by 3-glycidoxypropyl and (epoxycyclohexyl)ethyl. Unsaturated organic groups for R²⁸ are exemplified by 3-methacryloyloxypropyl, 3-acryloyloxypropyl, and unsaturated monovalent hydrocarbon groups such as vinyl, allyl, hexenyl, undecylenyl.

Each R²⁹ is independently an unsubstituted, saturated hydrocarbon group of at least 1 carbon atom. R²⁹ may have up to 4 carbon atoms, alternatively up to 2 carbon atoms. R²⁹ is exemplified by methyl, ethyl, propyl, and butyl.

Examples of suitable epoxy-functional alkoxysilanes include 3-glycidoxypropyltrimethoxysilane, 3-glycidoxypropyltriethoxysilane, (epoxycyclohexyl)ethyldimethoxysilane, (epoxycyclohexyl)ethyldiethoxysilane and combinations thereof. Examples of suitable unsaturated alkoxysilanes include vinyltrimethoxysilane, allyltrimethoxysilane, allyltriethoxysilane, hexenyltrimethoxysilane, undecylenyltrimethoxysilane, 3-methacryloyloxypropyl trimethoxysilane, 3-methacryloyloxypropyl triethoxysilane, 3-acryloyloxypropyl trimethoxysilane, 3-acryloyloxypropyl triethoxysilane, and combinations thereof.

Component (VI) may comprise an epoxy-functional siloxane such as a reaction product of a hydroxy-terminated polyorganosiloxane with an epoxy-functional alkoxysilane, as described above, or a physical blend of the hydroxy-terminated polyorganosiloxane with the epoxy-functional alkoxysilane. Component (VI) may comprise a combination of an epoxy-functional alkoxysilane and an epoxy-functional siloxane. For example, component (VI) is exemplified by a mixture of 3-glycidoxypropyltrimethoxysilane and a reaction product of hydroxy-terminated methylvinylsiloxane with 3-glycidoxypropyltrimethoxysilane, or a mixture of 3-glycidoxypropyltrimethoxysilane and a hydroxy-terminated methylvinylsiloxane, or a mixture of 3-glycidoxypropyltrimethoxysilane and a hydroxy-terminated methyvinyl/dimethylsiloxane copolymer. When used as a physical blend rather than as a reaction product, these components may be stored separately in multiple-part kits.

Suitable transition metal chelates include titanates, zirconates such as zirconium acetylacetonate, aluminum chelates such as aluminum acetylacetonate, and combinations thereof. Transition metal chelates and methods for their preparation are known in the art, see for example, U.S. Patent 5,248,715, EP 0 493 791 A1, and EP 0 497 349 B1.

### Component (VII) Void Reducing Agent

Component (VII) is a void reducing agent. Component (VII) is added to the composition in an amount sufficient to reduce voids. Suitable void reducing agents are known in the art and commercially available, see for example, EP 0 850 997 A2 and U.S. Patents 4,273,902 and 5,684,060. Suitable void reducing agents can comprise zeolites, anhydrous aluminum sulfate, molecular sieves (preferably with a pore diameter of 10 Å or less), kieselguhr, silica gel, activated carbon, palladium compounds such as palladium metal, palladium metal supported on a substrate exemplified by carbon or alumina, and organopalladium compounds.

### Component (VIII) Pigment

Component (VIII) is a pigment. The amount of component (VIII) added to the composition depends on the type of pigment selected. Component (VIII) may be added to the composition in an amount of 0.001 % to 30 % based on the weight of the composition. Pigments are known in the art and commercially available. Suitable pigments include carbon blacks, such as LB-1011C carbon black from Williams, chromium oxide pigments, such as Harcros G-6099, titanium dioxides such as those available from DuPont, and UV-active dyes such as (thiophenediyl)bis(t-butylbenzoxazole) which is commercially available under the name UVITEX OB from Ciba Specialty Chemicals.

### Component (IX) Filler

Component (IX) is a filler. The amount of component (IX) added to the composition depends on the type of filler selected. Component (IX) may be added to the composition in an amount of 0.1 % to 90 % based on the weight of the compositions. Suitable fillers include reinforcing fillers such silica, titania, and combinations thereof. Suitable reinforcing fillers are known in the art and commercially available, such as a ground silica sold under the name MIN-U-SIL by U.S. Silica of Berkeley Springs, WV or fumed silica sold under the name CAB-O-SIL by Cabot Corporation of Massachusetts.

Conductive fillers (*i.e*., fillers that are thermally conductive, electrically conductive, or both) may also be used as component (IX). Suitable conductive fillers include metal particles, metal oxide particles, and a combination thereof. Suitable thermally conductive fillers are exemplified by aluminum nitride; aluminum oxide; barium titinate; beryllium oxide; boron nitride; diamond; graphite; magnesium oxide; metal particulate such as copper, gold, nickel, or silver; silicon carbide; tungsten carbide; zinc oxide, and a combination thereof.

Conductive fillers are known in the art and commercially available, see for example, U.S. Patent 6,169,142 (col. 4, lines 7-33). For example, CB-A20S and Al-43-Me are aluminum oxide fillers of differing particle sizes commercially available from Showa-Denko, and AA-04, AA-2, and AA18 are aluminum oxide fillers commercially available from Sumitomo Chemical Company. Silver filler is commercially available from Metalor Technologies U.S.A. Corp. of Attleboro, Massachusetts, U.S.A. Boron nitride filler is commercially available from Advanced Ceramics Corporation, Cleveland, Ohio, U.S.A.

The shape of the conductive filler particles is not specifically restricted, however, rounded or spherical particles may prevent viscosity increase to an undesirable level upon high loading of the thermally conductive filler in the composition.

A combination of thermally conductive fillers having differing particle sizes and different particle size distributions may be used. For example, it may be desirable to combine a first conductive filler having a larger average particle size with a second conductive filler having a smaller average particle size in a proportion meeting the closest packing theory distribution curve. This improves packing efficiency and may reduce viscosity and enhance heat transfer.

The thermally conductive filler may optionally be surface treated with a treating agent. Treating agents and treating methods are known in the art, see for example, U.S. Patent 6,169,142 (col. 4, line 42 to col. 5, line 2). The thermally conductive filler may be treated with the treating agent prior to combining the thermally conductive filler with the other components of the composition, or the thermally conductive filler may be treated *in situ.*

The treating agent can be an alkoxysilane having the formula: R³⁰ₓSi(OR³¹)₍₄₋ₓ₎, where x is 1, 2, or 3; alternatively x is 3. R³⁰ is a substituted or unsubstituted monovalent hydrocarbon group of at least 1 carbon atom, alternatively at least 8 carbon atoms. R³⁰ has up to 50 carbon atoms, alternatively up to 30 carbon atoms, alternatively up to 18 carbon atoms. R³⁰ is exemplified by alkyl groups such as hexyl, octyl, dodecyl, tetradecyl, hexadecyl, and octadecyl; and aromatic groups such as benzyl, phenyl and phenylethyl. R³⁰ can be saturated or unsaturated, branched or unbranched, and unsubstituted. R³⁰ can be saturated, unbranched, and unsubstituted.

R³¹ is an unsubstituted, saturated hydrocarbon group of at least 1 carbon atom. R³¹ may have up to 4 carbon atoms, alternatively up to 2 carbon atoms. The treating agent is exemplified by hexyltrimethoxysilane, octyltriethoxysilane, decyltrimethoxysilane, dodecyltrimethyoxysilane, tetradecyltrimethoxysilane, phenyltrimethoxysilane, phenylethyltrimethoxysilane, octadecyltrimethoxysilane, octadecyltriethoxysilane, and a combination thereof.

Alkoxy-functional oligosiloxanes can also be used as treatment agents. Alkoxy-functional oligosiloxanes and methods for their preparation are known in the art, see for example, EP 1 101 167 A2. For example, suitable alkoxy-functional oligosiloxanes include those of the formula (R³²O)_{d}Si(OSiR³³₂R³⁴)_{4-d}. In this formula, d is 1, 2, or 3, alternatively d is 3. Each R³² can be an alkyl group. Each R³³ can be independently selected from saturated and unsaturated monovalent hydrocarbon groups of 1 to 10 carbon atoms. Each R³⁴ can be a saturated or unsaturated monovalent hydrocarbon group having at least 11 carbon atoms.

Metal fillers can be treated with alkylthiols such as octadecyl mercaptan and others, and fatty acids such as oleic acid, stearic acid, titanates, titanate coupling agents, zirconate coupling agents, and a combination thereof.

Treatment agents for alumina or passivated aluminum nitride could include alkoxysilyl functional alkylmethyl polysiloxanes (*e.g*., partial hydrolysis condensate of R³⁵_{b}R³⁶_{c}Si(OR³⁷)_{(4-b-c)} or cohydrolysis condensates or mixtures), similar materials where the hydrolyzable group would be silazane, acyloxy or oximo. In all of these, a group tethered to Si, such as R³⁵ in the formula above, is a long chain unsaturated monovalent hydrocarbon or monovalent aromatic-functional hydrocarbon. R³⁶ is a monovalent hydrocarbon group, and R³⁷ is a monovalent hydrocarbon group of 1 to 4 carbon atoms. In the formula above, b is 1, 2, or 3 and c is 0, 1, or 2, with the proviso that b + c is 1, 2, or 3. One skilled in the art could optimize a specific treatment to aid dispersion of the filler without undue experimentation.

### Component (X) Cure Modifier

Component (X) is an cure modifier. Component (X) can be added to extend the shelf life or working time, or both, of the composition of this invention. Component (X) can be added to raise the curing temperature of the composition. Suitable cure modifiers are known in the art and are commercially available. Component (X) is exemplified by acetylenic alcohols such as methyl butynol, ethynyl cyclohexanol, dimethyl hexynol, and combinations thereof; cycloalkenylsiloxanes such as methylvinylcyclosiloxanes exemplified by 1,3,5,7-tetramethyl-1,3,5,7-tetravinylcyclotetrasiloxane, 1,3,5,7-tetramethyl-1,3,5,7-tetrahexenylcyclotetrasiloxane, and combinations thereof; ene-yne compounds such as 3-methyl-3-penten-1-yne, 3,5-dimethyl-3-hexen-1-yne; triazoles such as benzotriazole; phosphines; mercaptans; hydrazines; amines such as tetramethyl ethylenediamine, dialkyl fumarates, dialkenyl fumarates, dialkoxyalkyl fumarates, maleates, and combinations thereof.

Suitable cure modifiers are disclosed by, for example, U.S. Patents 3,445,420; 3,989,667; 4,584,361; and 5,036,117.

The amount of component (X) added to the composition will depend on the particular cure modifier used, the nature and amount of component (III), and the composition of component (II). However, the amount of component (X) may be 0.001 % to 10 % based on the weight of the composition.

### Component (XI) Rheology Modifier

Component (XI) is a rheology modifier. Rheology modifiers can be added to change the thixotropic properties of the composition. Component (XI) is exemplified by flow control additives; reactive diluents; anti-settling agents; alpha-olefins; hydroxyl-terminated siliconeorganic copolymers, including but not limited to hydroxyl-terminated polypropyleneoxidedimethylsiloxane copolymers; and combinations thereof.

### Component (XII) Spacer

Component (XII) is a spacer. Spacers can comprise organic particles, inorganic particles, or a combination thereof. Spacers can be thermally conductive, electrically conductive, or both. Spacers can have a particle size of 25 micrometers to 250 micrometers. Spacers can comprise monodisperse beads. The amount of component (XII) depends on various factors including the distribution of particles, pressure to be applied during placement of the composition, temperature of placement, and others. The composition can contain up to 15%, alternatively up to 5% of component (XII) added in addition to, or instead of, a portion of component (IX).

### Other Optional Components

Other optional components may be added in addition to, or instead of, all or a portion of those described above, provided the optional component does not prevent the composition from curing to form a silicone product having improved chemical resistance, as described above. Examples of other optional components include, but are not limited to, acid acceptors; anti-oxidants; stabilizers such as magnesium oxide, calcium hydroxide, metal salt additives such as those disclosed in EP 0 950 685 A1, heat stabilizers, and ultra-violet (UV) stabilizers; flame retardants; silylating agents, such as 4-(trimethylsilyloxy)-3-penten-2-one and N-(t-butyl dimethylsilyl)-N-methyltrifluoroacetamide; desiccants, such as zeolites, anhydrous aluminum sulfate, molecular sieves (preferably with a pore diameter of 10 Å or less), kieselguhr, silica gel, and activated carbon; and blowing agents, such as water, methanol, ethanol, iso-propyl alcohol, benzyl alcohol, 1,4 butanediol, 1,5 pentanediol, 1,7 heptanediol, and silanols.

### Overall SiH:Vi Ratio

The components in the composition may be selected such that the molar ratio of the total amount of silicon-bonded hydrogen atoms to aliphatically unsaturated groups in the composition (SiHₜₒₜ/Viₜₒₜ) is greater than 0.9, alternatively at least 1.0, and alternatively at least 1.05. SiHₜₒₜ/Viₜₒₜ may be up to 10.0, alternatively up to 5.0, and alternatively up to 3.0. Without wishing to be bound by theory, it is thought that if SiHₜₒₜ/Viₜₒₜ is too low, then the composition may not cure or may not adhere to some substrates. Without wishing to be bound by theory, it is thought that if SiHₜₒₜ/Viₜₒₜ is too high, surface properties such as adhesion may be hindered and there may be an increase in Bleed from within the formulation to other surfaces.

### Kits

The composition may be a one-part composition or a multiple-part composition such as a two-part composition. In a multiple-part composition, components (II) and (III) are stored in separate parts. Any of components (I) and (IV) - (XII) can be added to either or both parts. One skilled in the art would know how to select components for each part without undue experimentation.

When a multiple part composition is prepared, it may be marketed as a kit. The kit may further comprise information or instructions or both as how to use the kit, how to combine the parts, or how to cure the resulting combination, or combinations thereof. For example, a kit comprising Part A and Part B can be prepared as follows.

Part A comprises:
   (I) a polyorganosiloxane fluid having an average of at least two unsaturated organic groups per molecule, with the proviso that component (I) is free of fluorine atoms,
   (III) a hydrosilylation catalyst, optionally (IV) a fluoroorganosilicone,
      with the proviso that component (IV) has at least one functional group reactive with component (I), component (II), or both, and
      optionally (V) an unsaturated ester-functional compound,
      optionally (VI) an adhesion promoter,
      optionally (VII) a void reducing agent,
      optionally (VIII) a pigment,
      optionally (IX) a filler,
      optionally (X) an cure modifier,
      optionally (XI) a rheology modifier, and
      optionally (XII) a spacer; and
Part B comprises
   optionally (I) a polyorganosiloxane fluid having an average of at least two unsaturated organic groups per molecule, with the proviso that component (I) is free of fluorine atoms,
   (II) a crosslinking agent having at least two silicon-bonded hydrogen atoms per molecule, where component (II) is free of fluorine atoms,
      optionally (IV) a fluoroorganosilicone
      with the proviso that component (IV) has at least one functional group reactive with component (I), component (II), or both, and
      optionally (V) an unsaturated ester-functional compound,
      optionally (VI) an adhesion promoter,
      optionally (VII) a void reducing agent,
      optionally (VIII) a pigment,
      optionally (IX) a filler,
      optionally (X) an cure modifier,
      optionally (XI) a rheology modifier, and
      optionally (XII) a spacer;
      with the proviso that
      at least one of Part A and Part B contains component (IV).

Part A and Part B can be mixed together in a ratio of Part A: Part B (A:B) of 0.05:1 to 20:1, alternatively 0.1:1 to 10:1, alternatively 1:1 to 5:1.

### Method of Making the Composition

The compositions described above can be prepared by mixing the components by any convenient means. For example, the composition can be prepared by mixing all components at ambient temperature. When component (X) is present, component (X) may be added before component (III).

The mixer used is not specifically restricted and will be determined by the viscosity of the components and the composition. Suitable mixers include but are not limited to kneader type sigma blade mixers, double planetary mixers, non-intrusive mixers such as those reliant on centrifugal motion, and two- and three-roll rubber mills. One skilled in the art would be able to prepare the composition without undue experimentation by the methods disclosed above and in the examples set forth below.

### Method of Use

The composition of this invention is useful for a range of applications where modified surface or interface properties, or both, are desired. For example, the compositions described above cure to form an adhesive; release coating; moldmaking compound; protective coating for electronic circuitry, planar surfaces, fibers or small particles; or gasketing materials. Exposed surfaces of the fully cured or partially cured products of this composition may also be useful as substrates for bonding by another adhesive or for secondary bonding to another substrate (as exemplified by a dry film adhesive).

Cured products prepared using the compositions of this invention can vary in properties from rigid resins to elastomers to gels, depending upon various factors including the types and concentrations of components (I) and (II) and any optional components that are added to the composition. Cured products prepared using the compositions are useful in a variety of end-use applications, for example, as coatings or as molded or extruded articles. The compositions can be applied to substrates by various means, including but not limited to, dispensing, spinning a thin film coating, jetting, spraying, dipping, pouring, screen printing, extrusion or by the use of a brush, roller or coating bar. The selection of a particular application method will be determined at least in part by the viscosity of the curable composition. Furthermore, in their uncured state, these compositions may exhibit reduced Bleed.

Suitable substrates to which the composition, or cured product thereof, may be applied and which are useful in electronics applications include epoxies, polycarbonates, poly(butylene terephthalate) resins, polyamide resins and blends thereof, such as blends of polyamide resins with syndiotactic polystyrene such as those commercially available from the Dow Chemical Company, of Midland, Michigan, U.S.A., acrylonitrile-butadiene-styrenes, styrene-modified poly(phenylene oxides), poly(phenylene sulfides), vinyl esters, polyphthalamides, polyimides, silicon, aluminum, stainless steel alloys, titanium, copper, nickel, silver, gold, and combinations thereof.

The composition of this invention can be used, for moldmaking, for example, by
(1) casting the composition described above around a die to form an uncured mold,
(2) curing the uncured mold formed in step (1) to form a cured mold, and
(3) removing the die from the cured mold formed in step (2).
   The method may further comprise
(4) filling the cured mold with a molding composition,
(5) forming a part from the molding composition, and
(6) removing the part from the cured mold.

Alternatively, the composition can be used, for adhering two surfaces, such as in lid seal applications. For example, the composition can be used for gluing a plastic lid onto a plastic housing for electronic circuitry in an assembly process by a method comprising:
(1) applying the composition described above onto the plastic housing,
(2) placing the lid over the housing such that the edges of the lid are in contact with the composition, and
(3) curing the assembly to form a sealed housing.

Alternatively, the composition can be used, for example, to coat an electronic circuit board, by method comprising:
(1) applying the composition described above over the electronic circuit board, and
(2) curing the composition to produce a sealed circuit board.

Alternatively, the composition can be used, for example, for die attach applications, in a method comprising:
(1) applying the composition described above on an electronic substrate,
(2) attaching a semiconductor die to the composition,
(3) curing the composition to produce a bonded composite.

The method may further comprise one or more optional steps such as (4) repeating steps (1) to (3) to attach one or more additional semiconductor dice to the semiconductor die, (5) wire bonding the semiconductor die or semiconductor dice, (6) cleaning, for example by exposure to plasma, (7) overmolding the semiconductor die or semiconductor dice with a molding compound, and (8) attaching solder balls to form a finished package. In step (1), the electronic substrate may be, for example, a circuit board, a TAB tape, or other substrate known in the art, or the electronic substrate may be a semiconductor die.

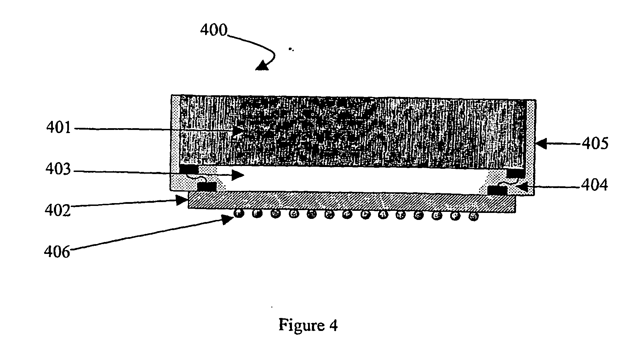

Figure 4 shows an example of a package 400 prepared according to this method. The package 400 includes a semiconductor die 401 bonded to a substrate 402 shown as a polyimide TAB tape flexible circuit through a die attach adhesive 403 prepared from the composition of this invention. The semiconductor die 401 is electrically connected to the substrate 402 through lead bonds 404. The shapes of the lead bonds 404 are dependent on the height of the semiconductor die 401 from the substrate 402. Encapsulant 405 is used to protect the lead bonds 404. Figure 4 also shows the solder balls 406, which provide the connection mechanism to the substrate (not shown) on which the package 400 will be mounted.

The composition of this invention may be printed or dispensed on the substrate 402. The semiconductor die 401 may then be placed with pressure and heat onto the composition to prepare the die attach adhesive 403.

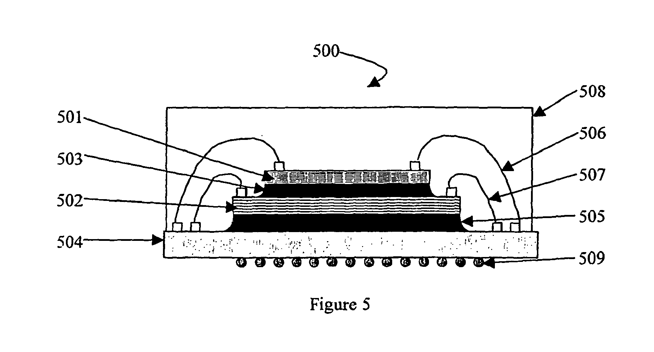

Figure 5 shows an example of a package 500 prepared according to this method. The package includes a first semiconductor die 501 stacked on top of a second semiconductor die 502 and attached through a first die attach adhesive 503. The second semiconductor die 502 is mounted to a substrate 504 shown in Figure 5 as a circuit board through a second die attach adhesive 505. The first die attach adhesive 503 and the second die attach adhesive 505 are prepared by curing the composition of this invention. The first die attach adhesive 503 and the second die attach adhesive 505 may be the same or different.

The package 500 may be assembled, for example, by applying a composition according to this invention to the substrate 504. The second semiconductor die 502 may be heated and placed onto the composition with enough pressure to spread the composition uniformly under the second semiconductor die 502. The heat of the die may partially or fully cure the composition to form the second die attach adhesive 505. A composition according to this invention may then be applied to the top of the second semiconductor die 502 and the first semiconductor die 501 may be applied hot to the composition with sufficient pressure, as described above. The composition partially or fully cures to form the first die attach adhesive 503.

The first semiconductor die 501 is electrically connected to the substrate through bonding wires 506 and the second semiconductor die 502 is electrically connected to the substrate through bonding wires 507. An overmolding 508 may then be applied to protect the semiconductor dice 501, 502 and the bonding wires 506, 507. Solder balls 509 may then be added to the substrate 504.

The composition may be cured at ambient or elevated temperature.

### Examples

These examples illustrate the invention to one of ordinary skill in the art and are not intended to limit the scope of the invention set forth in the claims.

The following substrates are used in these examples.

FR-4 is the epoxy side of a copper-clad FR-4 (glass-reinforced epoxy) laminate having a thickness of 0.152 centimeters (cm), which is available from Laird Plastics (West Palm Beach, FI).

PC is a Bisphenol A polycarbonate sheet having a thickness of 0.635 cm, which is sold under the name HYZOD M by Exotic Automation & Supply (Farmington Hills, MI).

PBT is a poly(butylene terephthalate) resin sheet having a thickness of 0.635 cm, which is sold under the name HYDEX 4101 (white) by Boedeker Plastics, Inc. (Shiner, TX).

GF-PBT is a glass-reinforced poly(butylene terephthalate) resin sheet having a thickness of 0.318 cm, which is sold under the name Celanex 3300 D (black) by Ticona (Summit, NJ).

N66 is an extruded nylon type 6/6 polyamide resin sheet having a thickness of 0.635 cm, which is available from Boedeker Plastics, Inc. (Shiner, TX).

ABS is an acrylonitrile-butadiene-styrene sheet having a thickness of 0.635 cm, which is available from Boedeker Plastics, Inc. (Shiner, TX).

PPO is a styrene-modified poly(phenylene oxide) sheet having a thickness of 0.635 cm, which is sold under the name NORYL EN-265 (black) by Boedeker Plastics, Inc. (Shiner, TX).

PPS is a poly(phenylene sulfide) sheet having a thickness of 0.318 cm, which is sold under the trademark TECHTRON PPS (natural) by Boedeker Plastics, Inc. (Shiner, TX).

Al is a die-cast aluminum having a thickness of 0.163 cm.

SS is a 304 stainless steel alloy (Type SS-34) panel having a thickness of 0.160 cm, which is available from Q-Panel Lab Products (Cleveland, OH).

Cu is the copper side of a copper-clad FR-4 (glass-reinforced epoxy) laminate having a thickness of 0.152 cm, which is available from Laird Plastics (West Palm Beach, FI).

PA-sPS1 is a thermoplastic, which comprises 70% of a blend and 30% glass filler. The blend comprises 70% Nylon 66 and 30% syndiotactic polystyrene. PA-sPS1 is commercially available from The Dow Chemical Company (Midland, Mi).

PA-sPS2 is a thermoplastic, which comprises 90% of a blend and 10% glass filler. The blend comprises 70% Nylon 66 and 30% syndiotactic polystyrene. PA-sPS2 is commercially available from The Dow Chemical Company (Midland, Mi).

PA-sPS3 is a thermoplastic, which comprises 70% of a blend and 30% glass filler. The blend comprises 50% Nylon 66 and 50% syndiotactic polystyrene. PA-sPS3 is commercially available from The Dow Chemical Company (Midland, Mi).

Vinyl ester is a compression molded glass-filled vinylester thermoset substrate available from The Dow Chemical Company under the trade name of Premi-Glas® 1285VE.

PPA is a 30% glass-filled polyphthalamide. The polyphthalamide resin is available from Solvay Advanced Polymers under the trade name of Amodel®.

### Reference Example 1 - Validation of In-Situ Surface Modification by Contact Angle Analysis

Silicone rubber samples are cast into smooth-walled 100 mm diameter sterile polystyrene Petri dishes (Fisher Scientific 08-757-12) to a thickness of about 4 mm. A VCA 2000 contact angle goniometer is used to measure water contact angles. The top of the sample is analyzed, as cast in 6 randomly selected positions.

### Reference Example 2 - X-Ray Photoelectron Spectroscopy of Ambient Cure Samples

Sections of cured silicone rubber samples are prepared as in Reference Example 1. Sections are then cut out with a clean razor blade for analysis. The top surface of the rubber is studied by X-ray photoelectron spectroscopy (XPS) to provide elemental composition of the free surface (air interface). The bulk (interior) of the sample is studied after exposing the inner area by slicing away a thin layer from the surface with a clean microtome blade. Each surface is analyzed in two places to verify reproducibility. The samples are mounted to a sample stage with metal clips and are de-gassed in a mini-vacuum chamber for 4 days and in the XPS sample introduction chamber overnight. Use of a liquid nitrogen shroud on the XPS is carried out to maintain an acceptable chamber pressure during analysis. A low-resolution survey spectrum and high-resolution spectra of O, C and Si are obtained at each analysis position. The surface compositions are given below in atomic percent.

XPS analysis is done using a Kratos Analytical AXIS 165 ESCA with a monochromatic Al x-ray source operating at 280 W. The survey spectra are carried out in hybrid mode (analysis spot about 1.4 mm x 0.8 mm) and high-resolution single element spectra are carried out in slot-magnetic mode (analysis spot about 0.8 mm x 0.4 mm). A low energy electron flood is used to neutralize sample surface charging.

### Reference Example 3 - Moldlife Testing

A composition is poured into a plastic cup around a central conical die and allowed to cure. The die is then mechanically removed from the resulting cured mold and replaced with a urethane resin. The resin plug has a metal handle, which is used to extract the molded part from the mold in a tensile direction. The force necessary to pull the part from the mold is measured by a load cell and recorded digitally. This process is repeated using an automated sampling robot, and the mold release force is recorded as a function of time until failure of the mold.

### Reference Example 4 - Cleaning of Substrates

Immediately before use, each plastic substrate is repeatedly cleaned by drawing a Kimwipe disposable wiper saturated with isopropyl alcohol over the test surface. In the final cleaning step, isopropyl alcohol is applied to the test surface using a TECHNICLOTH TX604 clean room wiper (The Texwipe Company, Upper Saddle River, NJ). The test surface of each Nylon substrate is sprayed with isopropyl alcohol, is wiped with a Kimwipe, is sprayed with acetone, and is wiped with a TECHNICLOTH TX604 clean room wiper. Metal substrates are cleaned in a similar manner using heptane followed by isopropyl alcohol. All substrates are allowed to air-dry for at least twenty minutes before application of a silicone composition.

### Reference Example 5 - Preparation of Heat Cure Samples for Surface Analysis

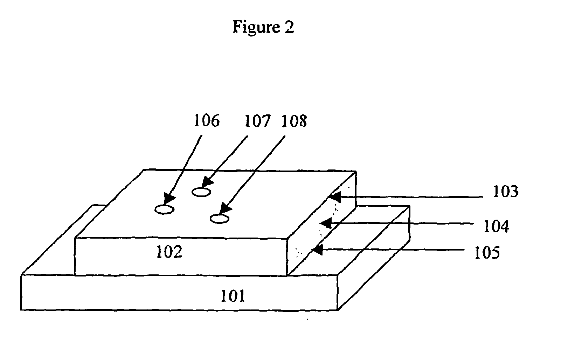

The freshly prepared adhesive composition is drawn over the surface of a polycarbonate substrate with a doctor blade to achieve a film thickness of 0.025 in. (0.0635 cm). The coated substrate is then heated in a forced air convection oven at a temperature of 70 °C for 30 minutes and then is allowed to cool to room temperature. The polycarbonate substrates 101 are shown in the schematic shown in Figure 2 and are cleaned as described in Reference Example 4. Cured samples 102 are examined spectroscopically in multiple spots along three planes of interest: the free surface 103, bulk 104, and substrate interface 105, as represented. To avoid atmospheric contamination, samples are loosely wrapped in clean, heavy gauge aluminum foil prior to and after testing. The substrate interface is exposed by carefully peeling away the cured film, if possible. In cases of very strong adhesion, the samples are either cryogenically fractured or carefully cut away to expose the interface. In the latter case, spectra from both sides of the interface are compared to ensure the separation did not occur cohesively. Bulk spectra are obtained from fresh areas exposed by slicing away a thin layer from the surface with a clean microtome blade. No attempt is made to control the thickness of this slice precisely because this technique gave access to areas that were well beyond the 1-2 micrometer (µm) depths where gradients are strongest. This is confirmed by good reproducibility among bulk spectra from random slices.

### Reference Example 6 -X-Ray Photoelectron Spectroscopy of Heat Cure Samples

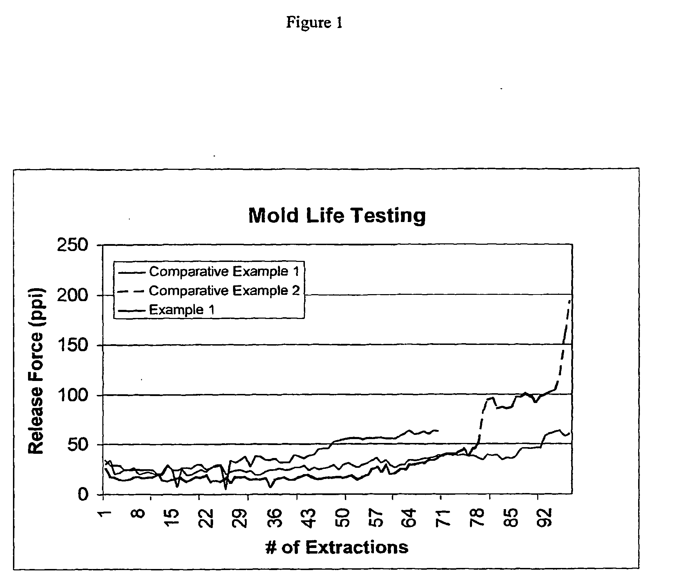

X-ray photoelectron spectroscopy analyses are obtained using a Kratos AXIS 165 instrument with a monochromatic x-ray source at 280 Watts (W). Charge compensation is employed. This method gives an analysis spot size of 0.7 millimeters (mm) x 1.4 mm. Three short strips are cut from each sample to provide substrate (105) and air (103) interfaces and a 'bulk' (104) composition (numbers used to describe the various surfaces are shown in Figure 1). The strips are 3-5 mm wide and 10-15 mm long. The samples are mounted to a long sample stage using metal clips. At least two positions on each strip are analyzed by XPS. A low resolution survey spectrum and high resolution spectra of O, C and Si are obtained at each position analyzed.

### Reference Example 7 - Surface Analysis by ATR-IR Test Method

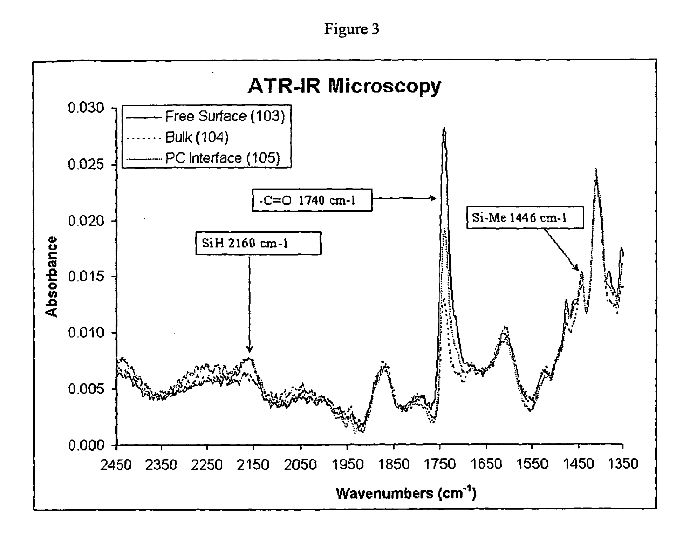

A Spectratech attenuated total reflectance infrared spectroscopy (ATR-IR) microscope is used to compare concentration at various depths of cured silicone films. This apparatus is equipped with an ATR objective lens consisting of a hemispherical Zn-Se crystal providing an angle of incidence of 38.68°. This geometry probes a depth of 2 ± 0.5 µm in the IR regions of interest. The sample is raised gently until a standard contact pressure reading is reached on a stage-mounted pressure sensor to ensure similar levels of contact for all spectra. Between each new spectrum, the crystal is cleaned by gently wiping with a Kimwipe moistened with analytical grade heptane and allowed to dry completely. In all ATR-IR experiments, sample chambers are thoroughly purged with dry nitrogen gas before obtaining background spectra. Each spectrum is generated with 256 scans. Absorption peak height analysis is performed with standardized baseline points using Omnic™ software. Three replicate spectra (depicted schematically as spots 106, 107, 108 in Figure 2) were obtained at each of the three surfaces (103, 104, 105) analyzed. For each spectrum (such as any of the three spectra shown in Figure 3), the normalized peak heights for both the carbonyl (-C=O) stretch at 1740 cm⁻¹ and silicon hydride (-Si-H) at 2160 cm⁻¹ are calculated by dividing by the peak height of the silicon-methyl (-Si-Me) band at 1446 cm⁻¹. The normalized peak heights are then averaged over the three replicates. Comparison of the relative level of interface enrichment with respect to the bulk is made by dividing the average normalized peak ratio for the air and substrate interfaces (103 and 105, respectively) by the corresponding value in the bulk (104).

### Reference Example 8 - Thermal Gradient Cure / Peel Testing

An hot press consisting of two aluminum plates containing cartridge heaters embedded at one end of each plate, and chilled water cooling lines embedded at the other end is used to prepare and test heat-curing adhesives. This design gives a linear gradient in temperature that can be adjusted in range by controlling the temperature of the hot and cold ends. Thermocouples embedded in both the upper and lower plate are used to control and measure the thermal gradient. In this test, the steady state temperature gradient ranges from 90 °C to 170 °C along the 3" length of the adhesive peel specimen. The peel joint is constructed by sandwiching a layer of the test adhesive between a substrate and the upper plate, which is lined with 0.002" thick aluminum foil that is affixed by a spray mount adhesive (3M Shipping Mate™ labeling adhesive). The substrate used in this example is Celanex 3300 D (Ticona) glass-filled polybutylene terephthalate that is cleaned according to the procedure of Reference Example 4. At each end of the substrate, a 0.041" thick copper wire is embedded in the adhesive to set the bondline thickness. The samples are cured in the gradient press for 60 min then allowed to cool 15 min. at room temperature by free convection.

Upon cooling, the sample is removed from the hot press by gently prying away the aluminum foil from the upper plate. The adhesive is then scored through the Al foil to the substrate surface to create a 0.5" wide peel strip along the length of the substrate. A crack is initiated at the adhesive-substrate interface at the cold end of the substrate by cutting through the adhesive to the substrate surface at approximately 45 ° angle. Adhesion is tested by clamping a 1500 g load onto the Al foil-backed peel strip and allowing the weight to hang for 15 min while the substrate is supported by a metal frame. This results in a 90° peel test with a peeling force of 1176 N/m. The force is such that when the mode of failure transitions from adhesive failure to fully cohesive failure, the crack is arrested. The distance to the point of crack arrest is measured and converted to the corresponding temperature by a linear regression fit of the digitally recorded thermocouple readings at steady state. This temperature is defined as the threshold cure temperature for onset of cohesive failure (T_{CF}). By this method, one can also measure the distance at which the material goes from a liquid state to a solid. The corresponding temperature is defined as the threshold temperature for cure (T_{cure}) for the given time in the hot press.

### Reference Example 9 - Preparation of Lap Shear Specimens and Measurement of Adhesion by Single Lap Shear Testing

Cleaned substrates are placed in a machined aluminum support jig designed to support two 3-inch long substrate panels with an overlap area of 1 square inch, or 0.5 square inches, and a bondline thickness of 0.030 inches. The adhesive composition to be tested is applied with a microspatula, spreading out carefully to not incorporate air into the sample. A second cleaned substrate is placed over the adhesive and is compressed to form the appropriate thickness by lightly screwing down the upper restraining bar. Samples are transferred to a convection oven pre-set to 150 °C and are allowed to cure for 60 min. Following removal from the oven and cooling to room temperature, the specimens are removed from the jigs, and all excess adhesive is trimmed away completely from the edges of the lap region with a razor blade. After 24 hours, the samples are loaded into a MTS Sintech 5/G tensile tester equipped with a 5000 pound-force transducer and tested at a crosshead speed of 0.085 cm/second under ambient conditions. Median values of maximum stress from at least three replicates of each substrate/composition combination are reported along with mode of failure rated by estimated percentage of total bond area exhibiting cohesive failure (CF). In cases where fracture occurs through the silicone product but very close to one of the substrate surfaces to leave only a thin film of residue, this effect is additionally noted as "thin film" failure.

### Comparative Example 1 - No fluoroorganosilicone

To 50.0 parts of Comparative Example 1 Base is added 5.0 parts of Comparative Example 1 Curing Agent in a 2 ounce polypropylene mixing cup. The composition is mixed using three consecutive 12 second cycles in a Hauschild model AM-501 "dental" mixer with manual scraping of the container walls between steps. The Base and Curing Agent formulations are as follows.

Comparative Example 1 Base contains 58.37 % dimethylvinylsiloxy-terminated polydimethylsiloxane having a viscosity of 1800 to 2400 cP; 6.6 % dimethylhexenylsiloxy-terminated, dimethylsiloxane/methylhexenylsiloxane having a viscosity of 390 cP and a vinyl content of 1%; 27.34 % precipitated silica filler (from DeGussa), 1.89% zircon, zirconsilicate filler having an average particle diameter of 5 micrometers, 0.38% Catalyst, which is a mixture of 98 % dimethylvinylsiloxy-terminated, dimethylsiloxane and 2% 1,3-diethenyl-1,1,3,3 -tetramethyldisiloxane complexes with platinum, said mixture having a platinum content of 0.88 %; 3.85% hexamethyldisilazane; and 1.57% deionized water.

Comparative Example 1 Curing Agent contains 27.40 % dimethyl,vinylsiloxy-terminated polydimethylsiloxane having a viscosity of 1800 to 2400 cP; 67.00 % of a Chain Extender, which is a mixture of 86% hydrogen-terminated polydimethylsiloxane, 7% octamethylcyclotetrasiloxane, 4% decamethylcyclopentasiloxane, and 3% *dimethylcyclosiloxanes having 6 or more silicon atoms per molecule, said mixture having a viscosity of 9 to 13 cSt; 1.60 % trimethylsiloxy-terminated poly(dimethylsiloxane/methylhydrogensiloxane) having an average of 3 dimethylsiloxane units and 5 methylhydrogensiloxane units per molecule and containing 0.8% of silicon-bonded hydrogen atoms; 1.50% of a mixture comprising methylvinyl cyclosiloxanes having 4 to 5 silicon atoms per molecule; and 2.50% green chromium oxide pigment (Harcros G-6099). Samples are allowed to cure at room temperature for at least 48 hours.

### Example 1 - Fluoroorganosilicone added to Comparative Example 1

To 50.0 g of Comparative Example 1 Base is added and mixed 2.30 g dimethylvinyl-terminated poly(methyl-3,3,3-trifluoropropylsiloxane) having 1 % vinyl and viscosity of 1000 cSt. To 5.0 g of Comparative Example 1 Curing Agent is added and mixed 0.19 g of trimethylsiloxy-terminated poly(methylhydrogensiloxane/methyl-6,6,6,5,5,4,4,3,3-nonafluorohexylsiloxane) having an average of 28 methylhydrogensiloxane units and 12 methyl-6,6,6,5,5,4,4,3,3-nonafluorohexyl siloxane units per molecule and having a viscosity of 35 cSt.
The resulting Example 1 Base and Curing Agent are mixed in a manner identical to that described in Comparative Example 1. Samples are allowed to cure at room temperature for at least 48 hours.

### Comparative Example 2

Comparative Example 2 Base and Comparative Example 2 curing agent are mixed in the manner described for Comparative Example 1 and are allowed to cure at least 48 hour at room temperature before testing.

Comparative Example 2 Base contains 42.52 % of a base polymer, dimethyl,vinylsiloxy-terminated polydimethylsiloxane having a viscosity of 1800 to 2400 cP; 2.80 % hexamethyldisilazane; 1.22% water; 19.94% precipitated silica filler (from DeGussa); 1.39% Zircon (ZR-silicate), 5 micron, WTN grade; 4.82% of a base copolymer, dimethylhexenylsiloxy-terminated dimethylsiloxane/methylhexenylsiloxane having a viscosity of 320 to 420 cSt; 0.38% of catalyst consisting of a mixture of 98 % dimethylvinylsiloxy-terminated, dimethylsiloxane and 2% 1,3-diethenyl-1,1,3,3 - tetramethyldisiloxane complexes with platinum, said mixture having a platinum content of 0.84% to 0.92 %; 26.85% quartz powder, Sikron SF600; and 0.08% tetramethyldivinyldisilazane.

Comparative Example 2 Base is prepared by mixing two-thirds of the base polymer, dimethyl,vinylsiloxy-terminated polydimethylsiloxane having a viscosity of 1800 to 2400 cP with hexamethyldisilazane and water, adding precipitated silica filler from Degussa, mixing and heating to 150 to 200 °C under normal pressure, then heating under vacuum to remove volatiles. The Zr-silicate, the remaining one-third of the base polymer, the base copolymer, silica, and the catalyst are added.

Comparative Example 2 Curing Agent is prepared by mixing 57.71 % of the base polymer; 3.27% of a first organohydrogenpolysiloxane, a trimethylsiloxy-terminated poly(dimethylsiloxane/methylhydrogensiloxane) having an average of 3 dimethylsiloxane units and 5 methylhydrogensiloxane units per molecule and containing about 0.8% of silicon-bonded hydrogen atoms; 36.57% of second organohydrogenpolysiloxane, a mixture of 86% hydrogen-terminated polydimethylsiloxane, 7% octamethylcyclotetrasiloxane, 4% decamethylcyclopentasiloxane, and 3% dimethylcyclosiloxanes having 6 or more silicon atoms per molecule, said mixture having a viscosity of 9 to 13 cSt; 0.75% of A mixture comprising methylvinyl cyclosiloxanes having 4 to 5 silicon atoms per molecule; 1.50% pigment, violet Harwick Stan-tone 24SP06; and 0.20% of methyl(tris(1,1-dimethyl-2-propynyloxy))silane.

Water contact angle data for Example 1 and Comparative Example 1 are shown in Table 1 for 6 replicates on each surface. Water contact angles for Example 1 consistently increase. This reflects a reduction in surface energy due to the enrichment of fluorinated groups at the free surface. Although an internal bulk water contact angle measurement exposed by slicing away the surface cannot be reliably obtained, the increased contact angle relative to the surfaces in contact with the polystyrene surface indicate that the fluorinated groups are enriched at the free surface in contact with air.

**Table 1: Water Contact Angle (θ) Results (6 replicates run for each sample are shown).**

| | Water Contact Angle Data | |
|---|---|---|
| | Free Surface (Top) | |
| | **Comparative Example 1** | **Example 1** |
| | θ (°) | θ (°) |
| | 110 | 116 |
| | 111 | 116 |
| | 110 | 116 |
| | 110 | 116 |
| | 111 | 116 |
| | 110 | 115 |
| Average: | 110.3 | 115.8 |
| Standard Deviation: | 0.5 | 0.4 |

XPS data for Example 1 and Comparative Example 1 are shown in Table 2. The increased fluorine signal intensity at the free surface relative to the bulk in Example 1 confirms that the fluorinated groups enrich the surface in this example. From these results, commensurate modification of surface-controlled properties such as release, chemical resistance, stain resistance, water repellency, and resistance to Bleed can be expected.

**Table 2: XPS elemental surface analysis summaries of the free surface and bulk compositions of cured siloxane rubbers**

| **Example 1** | | | | |
|---|---|---|---|---|
| | Free Surface (Top) | | Bulk (Middle) | |
| Spot: | A | B | A | B |
| **Elements** | | At. % | | At. % |
| **F** | 5.3 | 4.4 | 1.2 | 1.5 |
| **O** | 22.2 | 22.2 | 23.4 | 23.6 |
| **C** | 49.1 | 49.6 | 49.2 | 49.1 |
| **Si** | 23.4 | 23.8 | 26.2 | 25.8 |

| **Comparative Example 1** | | | | |
|---|---|---|---|---|
| | Free Surface (Top) | | Bulk (Middle) | |
| Spot: | A | B | A | B |
| **Elements** | | At. % | | At. % |
| **F** | 0.2 | 0.1 | 0.0 | 0.0 |
| **O** | 25.0 | 24.9 | 24.1 | 24.0 |
| **C** | 49.0 | 49.4 | 49.1 | 49.5 |
| **Si** | 25.8 | 25.6 | 26.8 | 26.5 |

Mold life test results are shown in Figure 1. An increase in mold release force is an indication of mold failure, usually accompanied by loss of features on the molded part. Mold failure is known to occur primarily by hardening and degradation due to penetration by the monomers or pre-polymers present in casting resins used for plastic parts. The retention of a low release force for Example 1 without a catastrophic increase (as in Comparative Example 2), and generally lower values than Comparative Example 2, show that the addition of a curable fluorosilicone component to an addition curing silicone rubber provides improved resistance to degradation by the urethane pre-polymer in this composition.

The following ingredients are used in Examples 2-5 and Comparative Examples 3-6.

Blend 1 is a mixture of (i) 27 parts of an organopolysiloxane resin consisting essentially of CH₂=CH(CH₃)₂SiO_{1/2} units, (CH₃)₃SiO_{1/2} units, and SiO_{4/2} units, wherein the mole ratio of CH₂=CH(CH₃)₂SiO_{1/2} units and (CH₃)₃SiO_{1/2} units combined to SiO_{4/2} units is 0.7, and the resin has weight-average molecular weight of 22,000, a polydispersity of 5, and contains 1.8% by weight (5.5 mole%) of vinyl groups, (ii) 71 parts of a dimethylvinylsiloxy-terminated polydimethylsiloxane having a viscosity of 55 Pa·s at 25 °C, (iii) 0.1 part ethyl benzene, (iv) 0.4 part xylene, (v) 0.5 part tetra(trimethylsiloxy)silane, and (vi) 0.7 part dimethyl cyclosiloxanes.

Blend 2 is a combination of (i) 27% of an organopolysiloxane resin consisting essentially of CH₂=CH(CH₃)₂SiO_{1/2} units, (CH₃)₃SiO_{1/2} units, and SiO_{4/2} units, wherein the mole ratio of CH₂=CH(CH₃)₂SiO_{1/2} units and (CH₃)₃SiO_{1/2} units combined to SiO_{4/2} units is about 0.7, and the resin has weight-average molecular weight of about 22,000, a polydispersity of about 5, and contains about 1.8% by weight (about 5.5 mole%) of vinyl groups, (ii) 71% of a dimethylvinylsiloxy-terminated polydimethylsiloxane having a viscosity of about 55 Pa·s at 25 °C. and (iii) 2% xylene and cyclic polydimethylsiloxanes.

PDMS 1 is dimethylvinyl siloxy-terminated linear polydimethylsiloxane having a viscosity of 450 cP at 25 °C.

Catalyst 1 is a mixture of 1% of a platinum(IV) complex of 1,1-diethenyl-1,1,3,3-tetramethyldisiloxane, 92% of dimethylvinylsiloxy-terminated polydimethylsiloxane having a viscosity of 0.45 Pa·s at 25 °C, and 7% of tetramethyldivinyldisiloxane.

Adhesion Promoter 1 is a mixture of 46% 3-glycidoxypropyltrimethoxysilane, 40% hydroxy-terminated methylvinylsiloxane, 7% cyclic methylvinylsiloxane, 6% a reaction product of hydroxy terminated methylvinyl siloxane, with 3-glycidoxypropyltrimethoxysilane, and 1% methanol. The mixture has a viscosity of 15 cSt at 25 °C.

Adhesion Promoter 2 is a reaction product of hydroxy-terminated poly(dimethylsiloxanelmethyvinylsiloxane) with (glycidoxypropyl)trimethoxysilane.

Void Reducing Agent is palladium on carbon.

Pigment is carbon black from Williams.

Pigment 2 is a mixture of 12% zinc oxide, 6% carbon black, and 82% dimethylvinyisiloxy-terminated dimethylsiloxane. The mixture has a viscosity of 20 to 60 Pa·s.

Quartz is a ground silica sold under the name MIN-U-SIL 5 by U.S. Silica (Berkeley Springs, WV). The silica has a topsize of 5 µm (98% < 5 µm), a median particle size of 1.6 µm, a tapped density of 41, an untapped density of 31, and a specific gravity of 2.65.

Organohydrogenpolysiloxane 1 is a trimethylsiloxy-terminated poly(dimethylsiloxane/methylhydrogensiloxane) having an average of 3 dimethylsiloxane units and 5 methylhydrogensiloxane units per molecule and containing 0.8% of silicon-bonded hydrogen atoms.

Unsaturated ester-functional compound 1 is neopentylglycol diacrylate.

Unsaturated ester-functional compound 2 is neopentylglycol dimethacrylate.

Fluoroorganosilicone I is dimethylvinyisiloxy-terminated methyl 3,3,3-trifluoropropyl siloxane having 0.5 to 2% vinyl groups and a viscosity of 310 to 2000 cSt at 25 °C.

Fluoroorganosilicone 2 is trimethylsiloxy-terminated poly(methylhydrogensiloxane/methyl-6,6,6,5,5,4,4,3,3-nonafluorohexylsiloxane) having an average of 28 methylhydrogensiloxane units and 12 methyl-6,6,6,5,5,4,4,3,3-nonafluorohexyl siloxane units per molecule.

Organohydrogenpolysiloxane 2 is methylhydrogen siloxane having a viscosity of 20 to 40 cSt at 25 °C and 1.4 to 1.75% hydrogen by weight.

Cure Modifier 1 is 3,5-dimethyl-1-hexyn-3-ol.

Reinforcing Silica is hexamethyldisilazane-treated silica having a BET surface area of between 200 and 250 meters squared per gram (m²/g), pH of 4.5 to 6.5, and moisture content not exceeding 0.6 % measured gravimetrically at 105 °C. This material is sold under the name of Cab-O-Sil TS-530 by Cabot Corporation.

Organohydrogenpolysiloxane 3 is a combination of dimethyl, methylhydrogen siloxane with methyl silsesquioxane, said combination having a SiH content of 0.85 wt%.

Rheology modifier is a trimethylsiloxy-terminated dimethyl, methyl(propyl(poly(propyleneoxide)hydroxy)) siloxane copolymer, having a viscosity of 140 to 190 centiStokes (cSt).

Adhesion Promoter 3 is a siloxane diol of the formula (HO)M-D-D(Vi)-M(OH), where M represents a unit of the formula CH₃SiO_{3/2}, D represents a unit of the formula (CH₃)₂SiO_{2/2}, and D(Vi) represents a unit of the formula (CH₃)(CH₂=CH)SiO_{2/2}.

### Example 2 - Composition for Surface Analysis

A two-part model base formulation is prepared by mixing 35.1 parts of PDMS 1, 64.7 parts of Quartz, and 0.39 part of Catalyst 1 as Part A. Part B is prepared by mixing 37.8 pats of PDMS 1, 59.9 parts Quartz, and 2.31 parts Organohydrogenpolysiloxane 1.

To 4.65 parts of Part A of the Base formulation is added 0.25 part of Unsaturated ester-functional compound 1. To 4.65 parts of Part B of the Base formulation is added 0.46 part of Fluoroorganosilicone 2. Parts A and B are hand mixed with a microspatula, and the mixture is cast into a film sample according to the method described in Reference Example 5. The sample is analyzed according to the methods of Reference Example 6 and Reference Example 7. The results are in Tables 3 and 4 and Figure 3.

### Comparative Example 3 - Composition without fluorosilicone additive

To 4.74 parts of Part A of the Base formulation of Example 4 is added 0.25 part of Unsaturated ester-functional compound 1. To 4.74 parts of Part B of the Base formulation of Example 4 is added 0.27 part of Organohydrogenpolysiloxane 1, an amount giving a ratio of 1 mol of SiH per mole of methacryloyloxy functionality from Unsaturated ester-functional compound 1. Parts A and B are then hand mixed with a microspatula, and the mixture is cast into a film sample according to the method described in Reference Example 5. The sample is analyzed according to the methods of Reference Example 6 and Reference Example 7. The results are in Tables 3 and 4 and Figure 3.

**Table 3 - Reference Example 6 Results**

| Example 4 | | | | | | |
|---|---|---|---|---|---|---|
| | Free Surface (103) | | Bulk (104) | | PC Interface (105) | |
| Spot | 106 | 107 | 106 | 107 | 106 | 107 |
| Element | | | | | | |
| F | 29.3 | 30.3 | 3.9 | 4.0 | 12.3 | 12.4 |
| O | 16.3 | 16.2 | 25.5 | 25.5 | 22.4 | 22.7 |
| C | 44.5 | 43.9 | 48.5 | 48.6 | 47.5 | 46.9 |
| Si | 9.9 | 9.6 | 22.2 | 22.0 | 17.8 | 18.0 |
| C:Si Ratio | 4.5:1 | 4.6:1 | 2.2:1 | 2.2:1 | 2.7:1 | 2.6:1 |
| Hi Res C Spectra | | | | | | |

| | Free Surface (103) | | Bulk (104) | | PC Interface (105) | |
|---|---|---|---|---|---|---|
| Spot | 106 | 107 | 106 | Spot | 106 | 107 |
| Cls Peak | | | | | | |
| Aliphatic C | 63.2 | 60.1 | 93.3 | 93.1 | 82.1 | 82.4 |
| C-O | 7.8 | 9.7 | 2.5 | 2.7 | 6.8 | 7.7 |
| C=O | 3.6 | 3.8 | 1.0 | 1.0 | 2.0 | 1.6 |
| CF2 | 18.9 | 19.6 | 2.2 | 2.2 | 6.6 | 6.2 |
| CF3 | 6.5 | 6.8 | 1.0 | 1.1 | 2.5 | 2.1 |

| Comparative Example 7 | | | | | | |
|---|---|---|---|---|---|---|
| | Free Surface (103) | | Bulk (104) | | PC Interface (105) | |
| Spot | 106 | 107 | 106 | 107 | 106 | 107 |
| Element | | | | | | |
| F | ND | ND | ND | ND | ND | ND |
| O | 25.6 | 25.5 | 27.0 | 26.7 | 26.0 | 26.0 |
| C | 51.8 | 51.9 | 49.9 | 50.1 | 52.5 | 52.3 |
| Si | 22.6 | 22.6 | 23.1 | 23.2 | 21.5 | 21.7 |
| C:Si Ratio | 2.3:1 | 2.3:1 | 2.2:1 | 2.2:1 | 2.4:1 | 2.4:1 |
| Hi Res C Spectra | | | | | | |

| | Free Surface (103) | | Bulk (104) | | PC Interface (105) | |
|---|---|---|---|---|---|---|
| Spot | 106 | 107 | 106 | Spot | 106 | 107 |
| Cls Peak | | | | | | |
| Aliphatic C | 98.6 | 97.4 | 97.4 | 96.7 | 95.0 | 95.5 |
| C-O | 1.4 | 1.8 | 2.1 | 2.4 | 3.3 | 3.0 |
| C=O | ND | 0.8 | 0.5 | 0.9 | 1.7 | 1.5 |
| CF2 | ND | ND | ND | ND | ND | ND |
| CF3 | ND | ND | ND | ND | ND | ND |

| | | | | | | |
|---|---|---|---|---|---|---|
| ND means not detected. | | | | | | |

**Table 4 - Reference Example 7 Results**

| Area | | Example 4 | Comparative Example 7 |
|---|---|---|---|
| Free Surface (103) | -C=O | 2.1 | 0.8 |
| | -Si-H | 2.7 | 1.7 |
| Bulk (104) | -C=O | 1.0 | 1.0 |
| | -Si-H | 1.0 | 1.0 |
| Interface (105) | -C=O | 1.5 | 1.0 |
| | -Si-H | 1.8 | 0.4 |

Example 2 and Comparative Example 3 demonstrate spectroscopically that the combination of Unsaturated ester-functional compound 1 and Fluoroorganosilicone 2 in an addition curing silicone matrix provides enhanced enrichment of these species at the air and plastic interfaces. Therefore, without wishing to be bound by theory, it is expected that the use of a curable fluoroorganosilicone additive with a highly functional mobile additive such as an adhesion promoter provides commensurate modification of properties dependent upon surface and interface composition, such as adhesion and chemical resistance.

### Comparative Example 4

To 2.954 g of Base 2 Part A is added 2.954 g of Base 2 Part B in a 0.25 oz. polypropylene cup and mixed for three twelve second cycles in a Hauschild AM-501 centrifugal mixer with manual scraping of the walls with a spatula between each cycle. The resulting material is manually applied in a continuous film onto a PBT substrate then cured and tested using the method described in Reference Example 8. The threshold temperatures for onset of cure and adhesion are shown in Table 5.

Base 2 Part A consists of 53.86 parts Blend 2, 3.76 parts Reinforcing Silica, 30.31 parts Quartz, 0.24 parts Rheology modifier, 1.41 parts 20% aluminum acetoacetonate dispersed in Blend 2, 0.38 parts 5% palladium supported on carbon, 2.65 parts Pigment 2, 0.75 parts Catalyst 1, 4.42 parts Adhesion Promoter 2, and 2.21 parts Adhesion Promoter 3.

Base 2 Part B consists of 57.69 parts Blend 2, 4.03 parts Reinforcing Silica, 32.46 parts Quartz, 0.25 parts Rheology Modifier, 5.54 parts Organohydrogenpolysiloxane 3, and 0.02 parts Uvitex OB ultraviolet dye.

### Example 3

To 2.093 g of Base 2 Part A is added 2.094 g of Base 3 Part B in a 0.25 oz polypropylene cup and mixed for three twelve second cycles in a Haus centrifugal mixer with manual scraping of the walls with a spatula between each cycle. The resulting material is manually applied in a continuous film onto a PBT and tested using the method described in Reference Example 8. The threshold temperatures for onset of cure and adhesion are shown in Table 5.

Base 3 Part B consists of 57.23 parts Blend 2, 4.00 parts Reinforcing Silica, 32.20 parts Quartz, 0.25 parts Rheology modifier. 4.10 parts Organohydrogenpolysiloxane 3, 0.02 parts Uvitex OB ultraviolet dye, and 2.20 parts Fluoroorganosilicone 2. Base 3 Part B differs from Base 2 Part B only in the partial substitution of the SiH functionality of the Organohydrogenpolysiloxane 3 by the SiH groups from the fluoroorganosilicone additive.

**Table 4 - Thermal gradient cure determination of threshold temperatures for onset of cure and adhesion after 60 min cure**

| | Comparative Example 4 | Example 3 |
|---|---|---|
| **Threshold Temperature** | | |
| Cure (T_{cure}) | 62 ± 2 °C | 57 ± 2 °C |
| Adhesion (T_{CF}) | > 170 °C | 149 ± 2 °C |

Comparative Example 4 and Example 3 demonstrate that the use of a curable fluoroorganosilicone with an equivalent amount of adhesion promoter can substantially reduce the cure temperature necessary to obtain full adhesion to a plastic substrate. This is consistent with the effect of fluorosilicone additives to enhance enrichment of small molecules at the interfaces.

### Comparative Example 5 - Adhesive Composition

A one-part adhesive composition is prepared by mixing 62.43 parts Blend 1, 31.73 parts Quartz, 0.19 part Catalyst 1, 1.36 parts Adhesion Promoter 1, 0.20 part Void Reducing Agent, 0.20 part Pigment, 3.34 parts Organohydrogenpolysiloxane 1, 0.36 part

### Example 4 - Composition of Example 5 with SiH containing fluoroorganosilicone

A one-part adhesive composition is prepared by mixing 57.53 parts Blend 1, 32.67 parts Quartz, 0.21 part Catalyst 1, 1.32 parts Adhesion Promoter 1,0.19 part Void Reducing Agent, 0.19 part Pigment, 3.08 parts Organohydrogenpolysiloxane 1, 3.84 parts Fluoroorganosilicone 1, 0.45 part Organohydrogenpolysiloxane 2, 0.32 part Fluoroorganosilicone 2, and 0.19 part Cure Modifier 2. While this composition differs in composition from Comparative Example 5, it retains very similar levels of fillers and total silicone content, while retaining as closely as possible the molar ratios among functional groups and catalysts. Lap shear strength is tested according to the method of Reference Example 9. The results are in Table 5.

**Table 5 - Lap Shear Adhesion Test Results**

| Substrate | Comparative Example 5 | Mode of | Example 4 | Mode of |
|---|---|---|---|---|
| | Lap Shear Strength | Failure | Lap Shear | Failure |
| | (kPa) | (% CF) | (kPa) | (% CF) |
| PA-sPS1 | 1014 ± 83 | 0 | 1800 ± 200 | 80 |
| PA-sPS3 | 1069 ± 110 | 0 | 1648 ± 28 | 10 |

Comparative Example 5 and Example 4 demonstrate that with similar levels of adhesion promoter and the same SiHₜₒₜ/Viₜₒₜ ratio, the addition of unsaturated organic- and Si-H functional fluorosilicone additives results in significant improvements to the adhesion strength to glass-reinforced syndiotactic polystyrene/Nylon blends.

### Example 5

A composition is prepared by mixing 57.53 parts Blend 1, 0.21 parts Catalyst 1, 3.08 parts Organohydrogenpolysiloxane 1, 0.45 parts Organohydrogenpolysiloxane 2, 0.19 parts Cure Modifier 1, 0.19 parts Void Reducing Agent, and 0.19 Pigment, 32.67 parts Quartz, 1.32 parts Adhesion Promoter1, 3.84 parts Fluoroorganosilicone 1 and 0.32 parts Fluoroorganosilicone 2. The SiH containing species and vinyl containing species are included in amounts such that SiH_{B}/Vi_{A} is 2.7 and SiHₜₒₜ/Viₜₒₜ is 1.57. Lap Shear is analyzed and the results are in Table 6.

### Comparative Example 6

A composition is prepared by mixing 62.43 parts Blend 1, 0.19 parts Catalyst 1, 3.34 parts Organohydrogenpolysiloxane 1, 0.36 parts Organohydrogenpolysiloxane 2, 0.18 parts Cure Modifier 1, 0.20 parts Void Reducing Agent, 0.20 parts Pigment, 31.73 parts Quartz, and 1.36 parts Adhesion Promoter 1. The SiH containing species and vinyl containing species are included in amounts such that SiH_{B}/Vi_{A} is 2.5 and SiHₜₒₜ/Viₜₒₜ is 1.55. Lap Shear is analyzed and the results are in Table 6.

**Table 6**

| Median Lap Shear Adhesion Strengths | | | | |
|---|---|---|---|---|
| | Comparative Example 6 | | Example 5 | |
| | (kPa) | Mode of Failure | (kPa) | Mode of Failure |
| PA-sPS1 | 1014 ± 83 | AF | 1800 ±2 00 | CF |
| PA-sPS3 | 1068 ±111 | AF | 2157 ± 80 | CF |
| Al | 4616 ± 463 | CF | 4787 ± 467 | CF |
| Cu | 5664 ±132 | CF | 4412 ± 124 | CF |
| SS | 4514 ± 492 | CF | 5480 ± 563 | CF |

AF means adhesive failure (0% cohesive failure) and CF means greater than or equal to 80% cohesive failure.

Example 5 and Comparative Example 6 show that adhesion to some plastics can be improved significantly by the inclusion of a fluorosilicone, while retaining adhesion to metal surfaces.

### DRAWINGS

Figure 1 is a graph of release force as function of # of de-molding cycles for extraction of urethane parts from three silicone rubber mold formulations.

Figure 2 shows a sample used for determination of interface compositions by surface analysis according to the method described in Reference Example 5.

Figure 3 shows representative ATR-IR spectra from each surface represented in Figure 1 using a cured film of Example 4. Spectra are expanded in the region of spectral interest to show key IR bands.

Figure 4 shows an example of a package in which the composition of this invention is used as a die attach adhesive.

Figure 5 shows an example of a package in which the composition of this invention is used as a die attach adhesive.

### Reference Numerals

- 101: polycarbonate substrates
- 102: cured samples
- 103: free surface
- 104: bulk
- 105: substrate interface
- 106: spot for analysis
- 107: spot for analysis
- 108: spot for analysis
- 400: package
- 401: semiconductor die
- 402: substrate
- 403: die attach adhesive
- 404: lead bonds
- 405: encapsulant
- 406: solder balls
- 500: package
- 501: first semiconductor die
- 502: second semiconductor die
- 503: first die attach adhesive
- 504: substrate
- 505: second die attach adhesive
- 506: bonding wires
- 507: bonding wires
- 508: overmolding
- 509: solder balls

## Claims

1. A composition prepared by mixing components comprising:
(I) a polyorganosiloxane fluid having an average of at least two unsaturated organic groups per molecule, with the proviso that component (I) is free of fluorine atoms;
(II) a crosslinking agent having an average of at least two silicon-bonded hydrogen atoms per molecule, with the proviso that component (II) is free of fluorine atoms;
(III) a hydrosilylation catalyst; and
(IV) a fluoroorganosilicone selected from
(a)
R⁹₃SiO(R⁹₂SiO)*ₜ*(R⁹R¹⁰SiO)_{ϕ}SiR⁹₃,
(b)
R¹¹₂R¹²SiO(R¹¹₂SiO)_{κ}(R¹¹R¹²SiO)_{λ}SiR¹¹₂R¹²,
(c)
F₃C(CF₂)_{ν}R¹³-Si-[O-Si(R¹⁴)₂(R¹⁵)]₃,
(d) a resinous or branched structure consisting essentially of R¹⁵R¹⁴₂SiO_{1/2} units, CF₃(CF₂)_{ν}R¹³SiO_{3/2} units, and optionally SiO_{4/2} units, or
(e) a combination thereof, where
in formula (a),
*t* has an average value of 0 to 2000,
ϕ has an average value of 1 to 500,
each R⁹ is independently a hydrogen atom or a monovalent organic group with the provisos that at least one R⁹ is a hydrogen atom or an unsaturated monovalent organic group and each R⁹ is not an epoxy group or alkoxy group,
each R¹⁰ is independently a fluoro-functional hydrocarbon group;
in formula (b),
κ has an average value of 0 to 2000,
λ has an average value of 0 to 500,
each R¹¹ is independently a hydrogen atom or a monovalent organic group with the provisos that at least one R¹¹ is a hydrogen atom
or an unsaturated monovalent organic group, and each R¹¹ is not an epoxy group or an alkoxy group, and
each R¹² is independently a fluoro-functional hydrocarbon group, in formulae (c) and (d),
ν is 0 to 10,
each R¹³ is independently a divalent organic group,
each R¹⁴ is independently a monovalent hydrocarbon group free of aliphatic unsaturation, and
each R¹⁵ is independently a hydrogen atom or an aliphatically unsaturated hydrocarbon group.

2. The composition of claim 1, where component (I) further includes an MQ resin consisting essentially of R⁵₃SiO_{1/2} units and SiO_{4/2} units, a TD resin consisting essentially of R⁵SiO_{3/2} units and R⁵₂SiO_{2/2} units, an MT resin consisting essentially of R⁵₃SiO_{1/2} units and R⁵SiO_{3/2} units, an MTD resin consisting essentially of R⁵₃SiO_{1/2} units, R⁵SiO_{3/2} units, and R⁵₂SiO_{2/2} units, or a combination thereof, where
each R⁵ is a monovalent organic group of 1 to 20 carbon atoms, and
the resin contains an average of 3 to 30 mole percent of unsaturated organic groups.

3. The composition of claim 1, where component (II) has siloxane units selected from HR⁶₂SiO_{1/2}, R⁶₃SiO_{1/2}, HR⁶SiO_{2/2}, R⁶₂SiO_{2/2}, R⁶SiO_{3/2}, SiO_{4/2}, or combinations thereof; where each R⁶ is independently selected from monovalent organic groups free of aliphatic unsaturation.

4. The composition of claim 1, where component (II) is a combination of more than one crosslinking agent.

5. The composition of claim 1, where component (III) is selected from a platinum metal, a rhodium metal, or an organometallic compound.

6. The composition of claim 1, where component (III) is a microencapsulated hydrosilylation catalyst.

7. The composition of claim 1, where component (IV) is selected from
i) dimethylvinylsiloxy-terminated polymethyl3,3,3-trifluoropropyl siloxane,
ii) dimethylvinylsiloxy-terminated poly(methylhydrogensiloxane/methyl-6,6,6,5,5,4,4,3,3- nonafluorohexylsiloxane),
iii) trimethylsiloxy-terminated poly(methylhydrogensiloxane/methyl-6,6,6,5,5,4,4,3,3-nonafluorohexylsiloxane), or
iv) a combination thereof.

8. The composition of claim 1, including (V) an unsaturated ester-functional compound, (VI) an adhesion promoter, (VII) a void reducing agent, (VIII) a pigment, (IX) a filler, (X) a cure modifier, (XI) a rheology modifier, (XII) a spacer, (XIII) an acid acceptor, (XIV) an antioxidant, (XV) a stabilizer, (XVI) a flame retardant, (XVII) a flow control additive, (XVIII) a reactive diluent, (XIX) an anti-settling agent, (XX) a silylating agent, (XXI) a desiccant, (XXII) a blowing agent, or a combination thereof.

9. The composition of claim 1, where SiHₜₒₜ/Viₜₒₜ is 1.05 to 5.0.

10. Use of the composition of any one of claims 1 to 9 or 11 for an application selected from the group consisting of moldmaking, lid sealing, coating an electronic circuit board, and die attaching.

11. The composition of claim 1, where component (IV) is added to the composition in an amount of 0.01 to 100 parts by weight, per 100 parts by weight of component (I).

## Patentansprüche

1. Zusammensetzung, hergestellt durch Mischen von Komponenten, umfassend:
(I) eine Polyorganosiloxanflüssigkeit mit durchschnittlich mindestens zwei ungesättigten organischen Gruppen pro Molekül, unter der Voraussetzung, dass Komponente (I) frei von Fluoratomen ist;
(II) ein Vernetzungsmittel mit durchschnittlich mindestens zwei siliciumgebundenen Wasserstoffatomen pro Molekül, unter der Voraussetzung, dass Komponente (II) frei von Fluoratomen ist;
(III) einen Hydrosilylierungskatalysator und
(IV) ein Fluororganosilicon ausgewählt aus
(a)
R⁹₃SiO(R⁹₂SiO)ₜ(R⁹R¹⁰SiO)_{ϕ} SiR⁹₃,
(b)
R¹¹2R¹²SiO(R¹¹₂SiO)_{κ}(R¹¹R¹²SiO)_{λ}SiR¹¹₂R¹²,
(c)
F₃C(CF₂)_{ν}R¹³-Si-[O-Si(R¹⁴)₂(R¹⁵)]₃,
(d) einer harzförmigen oder verzweigten Struktur, die im Wesentlichen aus R¹⁵R¹⁴₂SiO_{1/2}-Einheiten, CF₃(CF₂)_{ν}R¹³SiO_{3/2}-Einheiten und optional SiO_{4/2}-Einheiten besteht, oder
(e)einer Kombination davon, wobei in Formel (a)
- τ einen Durchschnittswert von 0 bis 2000 hat,
- ϕ einen Durchschnittswert von 1 bis 500 hat,
- jedes R⁹ unabhängig voneinander ein Wasserstoffatom oder eine monovalente organische Gruppe ist, unter der Voraussetzung, dass mindestens ein R⁹ ein Wasserstoffatom oder eine ungesättigte monovalente organische Gruppe ist und jedes R⁹ keine Epoxygruppe oder Alkoxygruppe ist,
- jedes R¹⁰ unabhängig voneinander eine fluorfunktionelle Kohlenwasserstoffgruppe ist; in Formel (b)
- κ einen Durchschnittswert von 0 bis 2000 hat,
- λ einen Durchschnittswert von 0 bis 500 hat,
- jedes R¹¹ unabhängig voneinander ein Wasserstoffatom oder eine monovalente organische Gruppe ist, unter der Voraussetzung, dass mindestens ein R¹¹ ein Wasserstoffatom oder eine ungesättigte monovalente organische Gruppe ist und jedes R¹¹ keine Epoxygruppe oder Alkoxygruppe ist, und
- jedes R¹² unabhängig voneinander eine fluorfunktionelle Kohlenwasserstoffgruppe ist;
in Formeln (c) und (d)
- ν gleich 0 bis 10 ist,
- jedes R¹³ unabhängig voneinander eine divalente organische Gruppe ist,
- jedes R¹⁴ unabhängig voneinander eine monovalente Kohlenwasserstoffgruppe frei von aliphatischer Ungesättigtheit ist und
- jedes R¹⁵ unabhängig voneinander ein Wasserstoffatom oder eine aliphatisch ungesättigte Kohlenwasserstoffgruppe ist.

2. Zusammensetzung nach Anspruch 1, wobei Komponente (I) ferner ein MQ-Harz, das im Wesentlichen aus R⁵₃SiO_{1/2}-Einheiten und SiO_{4/2}-Einheiten besteht, ein TD-Harz, das im Wesentlichen aus R⁵SiO_{3/2}-Einheiten und R⁵₂SiO_{2/2}-Einheiten besteht, ein MT-Harz, das im Wesentlichen aus R⁵₃SiO_{1/2}-Einheiten und R⁵SiO_{3/2}-Einheiten besteht, ein MTD-Harz, das im Wesentlichen aus R⁵₃SiO_{1/2}-Einheiten, R⁵SiO_{3/2}-Einheiten und R⁵₂SiO_{2/2}-Einheiten besteht, oder eine Kombination davon, umfasst, wobei
jedes R⁵ eine monovalente organische Gruppe mit 1 bis 20 Kohlenstoffatomen ist und
das Harz durchschnittlich 3 bis 30 mole-% ungesättigte organische Gruppen enthält.

3. Zusammensetzung nach Anspruch 1, wobei Komponente (II) Siloxaneinheiten aufweist, ausgewählt aus HR⁶₂SiO_{1/2}, R⁶₃SiO_{1/2}, HR⁶SiO_{2/2}, R⁶₂SiO_{2/2}, R⁶SiO_{3/2}, SiO_{4/2} oder Kombinationen daraus, wobei jedes R⁶ unabhängig voneinander aus monovalenten organischen Gruppen frei von aliphatischer Ungesättigtheit ausgewählt ist.

4. Zusammensetzung nach Anspruch 1, wobei Komponente (II) eine Kombination von mehr als einem Vernetzungsmittel ist.

5. Zusammensetzung nach Anspruch 1, wobei Komponente (III) aus einem Platinmetall, einem Rhodiummetall oder einer metallorganischen Verbindung ausgewählt ist.

6. Zusammensetzung nach Anspruch 1, wobei Komponente (III) ein mikroverkapselter Hydrosilylierungskatalysator ist.

7. Zusammensetzung nach Anspruch 1, wobei Komponente (IV) aus
i) dimethylvinylsiloxyterminiertem Polymethyl-3,3,3-trifluorpropyl- siloxan,
ii) dimethylvinylsiloxyterminiertem Poly(methylwasserstoff- siloxan/methyl-6,6,6,5,5,4,4,3,3-nonafluorhexylsiloxan),
iii) trimethylsiloxyterminiertem Poly(methylwasserstoffsiloxan/methyl- 6,6,6,5,5,4,4,3,3-nonafluorhexylsiloxan), oder
iv) einer Kombination davon ausgewählt ist.

8. Zusammensetzung nach Anspruch 1, die (V) eine ungesättigte esterfunktionelle Verbindung, (VI) einen Haftvermittler, (VII) ein porenverringerndes Mittel, (VIII) ein Pigment, (IX) einen Füllstoff, (X) ein Härtungsmodifikationsmittel, (XI) ein Rheologiemodifikationsmittel, (XII) einen Spacer, (XIII) einen Säureakzeptor, (XIV) ein Antioxidationsmittel, (XV) einen Stabilisator, (XVI) ein Flammschutzmittel, (XVII) ein Verlaufmittel, (XVIII) einen Reaktivverdünner, (XIX) ein Antiabsetzmittel, (XX) ein Silylierungsmittel, (XXI) ein Trocknungsmittel, (XXII) ein Treibmittel oder eine Kombination davon umfasst.

9. Zusammensetzung nach Anspruch 1, wobei SiHₜₒₜ/Viₜₒₜ gleich 1,05 bis 5,0 ist.

10. Verwendung der Zusammensetzung nach einem der Ansprüche 1 bis 9 oder 11 für eine Anwendung, ausgewählt aus der Gruppe betstehend aus Formenbau, Abdichtung von Deckeln, Beschichten einer elektronischen Leiterplatte und Befestigen eines Chips.

11. Zusammensetzung nach Anspruch 1, wobei Komponente (IV) zu der Zusammensetzung in einer Menge von 0,01 bis 100 Gewichtsteilen pro 100 Gewichtsteile Komponente (I) gegeben wird.

## Revendications

1. Composition préparée par mélange de composants comprenant :
(I) un fluide de polyorganosiloxane ayant en moyenne au moins deux groupes organiques insaturés par molécule, sous réserve que le composant (I) soit exempt d'atomes de fluor ;
(II) un agent de réticulation ayant en moyenne au moins deux atomes d'hydrogène liés au silicium par molécule, sous réserve que le composant (II) soit exempt d'atomes de fluor ;
(III) un catalyseur d'hydrosilylation ; et
(IV) un silicone organique fluoré choisi parmi
(a)
R⁹₃SiO(R⁹₂SiO)ₜ(R⁹R¹⁰SiO)_{□}SiR⁹₃,
(b)
R¹¹₂R¹²SiO(R¹¹₂SiO)_{□}(R¹¹R¹²SiO)_{□}SiR¹¹₂R¹²,
(c)
F₃C(CF₂)_{□}R¹²-Si-[O-Si(R¹⁴)₂(R¹⁵)]₃,
(d) une structure résineuse ou ramifiée constituée essentiellement de motifs R¹⁵R¹⁴₂SiO_{1/2}, de motifs CF₃(CF₂)_{□}R¹³SiO_{3/2}, et éventuellement de motifs SiO_{4/2}, ou
(e) une de leurs combinaisons, où
dans la formule (a),
t vaut en moyenne de 0 à 2000,
ϕ vaut en moyenne de 1 à 500,
chaque R⁹ est indépendamment un atome d'hydrogène ou un groupe organique monovalent, sous réserve qu'au moins un R⁹ soit un atome d'hydrogène ou un groupe organique monovalent insaturé et que chaque R⁹ ne soit pas un groupe époxy ou un groupe alcoxy,
chaque R¹⁰ est indépendamment un groupe hydrocarboné à fonctionnalité fluoro ;
dans la formule (b),
κ vaut en moyenne de 0 à 2000,
λ vaut en moyenne de 0 à 500,
chaque R¹¹ est indépendamment un atome d'hydrogène ou un groupe organique monovalent, sous réserve qu'au moins un R¹¹ soit un atome d'hydrogène ou un groupe organique monovalent insaturé, et que chaque R¹¹ ne soit pas un groupe époxy ou un groupe alcoxy, et chaque R¹² est indépendamment un groupe hydrocarboné à fonctionnalité fluoro,
dans les formules (c) et (d),
ν vaut de 0 à 10,
chaque R¹³ est indépendamment un groupe organique divalent, chaque R¹⁴ est indépendamment un groupe hydrocarboné monovalent exempt d'insaturation aliphatique, et
chaque R¹⁵ est indépendamment un atome d'hydrogène ou un groupe hydrocarboné à insaturation aliphatique.

2. Composition selon la revendication 1, dans laquelle le composant (I) comprend en outre une résine MQ constituée essentiellement de motifs R⁵₃SiO_{1/2} et de motifs SiO_{4/2}, une résine TD constituée essentiellement de motifs R⁵SiO_{3/2} et de motifs R⁵₂SiO_{2/2}, une résine MT constituée essentiellement de motifs R⁵₃SiO_{1/2} et de motifs R⁵SiO_{3/2}, une résine MTD constituée essentiellement de motifs R⁵₃SiO_{1/2}, de motifs R⁵SiO_{3/2} et de motifs R⁵₂SiO_{2/2}, ou une de leurs combinaisons, où
chaque R⁵ est un groupe organique monovalent ayant de 1 à 20 atomes de carbone, et
la résine contient en moyenne 3 à 30 % en moles de groupes organiques insaturés.

3. Composition selon la revendication 1, dans laquelle le composant (II) a des motifs siloxane choisis parmi HR⁶₂SiO_{1/2}, R⁶₃SiO_{1/2}, HR⁶SiO_{2/2}, R⁶₂SiO_{2/2}, R⁶SiO_{3/2}, SiO_{4/2}, ou leurs combinaisons; où chaque R⁶ est indépendamment choisi parmi les groupes organiques monovalents exempts d'insaturation aliphatique.

4. Composition selon la revendication 1, dans laquelle le composant (II) est une combinaison de plusieurs agents de réticulation.

5. Composition selon la revendication 1, dans laquelle le composant (III) est choisi parmi le platine métallique, le rhodium métallique, et un composé organométallique.

6. Composition selon la revendication 1, dans laquelle le composant (III) est un catalyseur d'hydrosilylation microencapsulé.

7. Composition selon la revendication 1, dans laquelle le composant (IV) est choisi parmi
i) le polyméthyl-3,3,3-trifluoropropylsiloxane à terminaison diméthylvinylsiloxy,
ii) le poly(méthylhydrogénosiloxane/méthyl-6,6,6,5,5,4,4,3,3-nonafluorohexylsiloxane) à terminaison diméthylvinylsiloxy,
iii) le poly(méthylhydrogénosiloxane/méthyl-6,6,6,5,5,4,4,3,3-nonafluorohexylsiloxane) à terminaison triméthylsiloxy, ou
iv) une de leurs combinaisons.

8. Composition selon la revendication 1, comprenant (V) un composé à fonctionnalité ester insaturé, (VI) un promoteur d'adhésion, (VII) un agent réducteur de vide, (VIII) un pigment, (IX) une charge, (X) un modificateur de durcissement, (XI) un modificateur de rhéologie, (XII) un écarteur, (XIII) un accepteur d'acide, (XIV) un antioxydant, (XV) un stabilisant, (XVI) un retardateur d'inflammation, (XVII) un additif de contrôle d'écoulement, (XVIII) un diluant réactif, (XIX) un agent de suspension, (XX) un agent de silylation, (XXI) un siccatif, (XXII) un agent porogène, ou une de leurs combinaisons.

9. Composition selon la revendication 1, dans laquelle SiHₜₒₜ/Viₜₒₜ vaut de 1,05 à 5,0.

10. Utilisation de la composition de l'une quelconque des revendications 1 à 9 et 11 pour une application choisie dans le groupe constitué par la fabrication de moules, le scellement de couvercles, le revêtement de cartes de circuits électroniques, et l'attachement de filières.

11. Composition selon la revendication 1, dans laquelle le composant (IV) est ajouté à la composition en une quantité de 0,01 à 100 parties en poids pour 100 parties en poids de composant (I).
